(19) Europäisches Patentamt / European Patent Office / Office européen des brevets

(11) **EP 4 272 570 A1**

(12) **EUROPEAN PATENT APPLICATION**
published in accordance with Art. 153(4) EPC

(43) Date of publication:
**08.11.2023 Bulletin 2023/45**

(51) International Patent Classification (IPC):
**A23C 9/152** (2006.01)  **A23C 9/156** (2006.01)
**A23C 9/158** (2006.01)  **A23C 9/16** (2006.01)
**A23K 10/00** (2016.01)

(21) Application number: **21914513.3**

(22) Date of filing: **29.12.2021**

(52) Cooperative Patent Classification (CPC):
**A23C 9/152; A23C 9/156; A23C 9/158; A23C 9/16; A23K 10/00**

(86) International application number:
**PCT/CN2021/142533**

(87) International publication number:
**WO 2022/143781 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2020 CN 202011596309**
**29.12.2020 CN 202011605965**

(71) Applicant: **Wilmar (shanghai) Biotechnology Research &**
**Development Center Co., Ltd.**
**Shanghai 200137 (CN)**

(72) Inventors:
• **XU, Xuebing**
**Shanghai 200137 (CN)**
• **LI, Sheng**
**Shanghai 200137 (CN)**
• **ZHANG, Hong**
**Shanghai 200137 (CN)**
• **GE, Hui**
**Shanghai 200137 (CN)**
• **ZHANG, Lingzhi**
**Ningbo, Zhejiang 315211 (CN)**
• **ZHENG, Yan**
**Shanghai 200137 (CN)**
• **GUO, Ruihua**
**Shanghai 200137 (CN)**

(74) Representative: **Santoro, Sofia et al**
**Società Italiana Brevetti S.p.A.**
**Via Giosuè Carducci, 8**
**20123 Milano (IT)**

(54) **STRUCTURED EMULSION**

(57) A structured emulsion, comprising: 2-6% of an oil phase composition; 7-20% of a water-soluble composition; and 74-92% of water. In terms of fatty acids in the oil phase composition, the content of saturated fatty acids is less than or equal to 45%, the content of monounsaturated fatty acids is less than or equal to 50%, and the content of polyunsaturated fatty acids is less than or equal to 30%; the oil phase composition contains 0.4-2.9% of phospholipids on the basis of the total lipid mass.

EP 4 272 570 A1

**Description**

Technical Field

The present invention belongs to the field of formula food, in particular to a formula structured emulsion.

Background Art

Studies have shown that the particle size and lipid composition of milk fat globules can significantly affect lipolysis and nutrient metabolism (Michalski, M. C., Briard, V, Michel, F., et al. Journal of Dairy Science, 2005, 88, 1927-1940; Gallier, S., Vocking, K., Post, J. A., et al. Colloids Surf B Biointerfaces, 2015, 136, 329-39). The milk fat globules of naturally occurring breast milk have the following structure: triglycerides are wrapped by a 5-20 nm-thick phospholipid trimolecular membrane, and the phospholipid membrane is composed of phospholipids, glycoproteins, glycolipids and cholesterol; the particle size range of milk fat globules is 0.1-12 microns, and the average particle size is 4.2 microns. This structure makes it easier for the lipase to enter the milk fat globules and bind to internal triglycerides, so breast milk would have a fast lipolysis rate and a short gastric emptying time (Lopez C, Ménard O. Colloids Surf B, 2011, 83: 29-41). However, although the fat globules of reconstituted milk of traditional infant formula milk powder have a small particle size and a large specific surface area, their periphery is covered by a dense protein membrane, and the thickness of the membrane is relatively thick, reaching 20-100 nanometers; in order for the lipase to bind to the internal triglycerides, it needs to enzymatically hydrolyze the protein membrane first, so the traditional infant formula milk powder would have a relatively slow lipolysis rate and a long gastric emptying time.

Existing patents or patent applications related to the preparation of micron-sized infant formula emulsions and structured milk fat globules containing phospholipid components mainly focus on the protection of phospholipid content, sphingomyelin and cholesterol content in milk fat globules, and the protection of long-chain polyunsaturated fatty acids (LC-PUFA) and medium-chain fatty acids (MCFA) in fatty acids. Two important patent applications of Nutricia, WO 2016/163883 A2 and US 2018/0092376 A1, disclose a method for preparing formula milk powder containing micron-sized fat globules. The method uses a milk fat globule membrane protein or a butter powder-derived phospholipid as an emulsifier, and adopts low-speed shearing and low-pressure homogenization to prepare large-particle milk fat globules with a particle size of 2-6 microns. The fat in the fat globule is wrapped by a phospholipid monomolecular membrane containing phospholipids, proteins and cholesterol, which has the functions of promoting postprandial lipid absorption in infants, promoting gastric emptying in infants, and weight control. Mead Johnson's patent application US 20170231262 A1 discloses a nutritional composition containing structured fat globules with a specific particle size and fatty acid composition, and use thereof. The structured fat globules are fat globules with a particle size of 2-13 $\mu$m, which are composed of phospholipids, cholesterol, membrane proteins, and oils and fats containing a certain amount of trans-fatty acids, branched fatty acids and conjugated linoleic acid, and can promote lipid digestion and gastrointestinal motility. However, the effects of sterols (especially phytosterols) and phospholipid composition (PC, PI, PE, PS, and SM) on enzymatic hydrolysis and absorption of lipids of infant formula emulsion have not been reported.

Summary of the Invention

The first aspect of the present invention provides a polar lipid composition for a formula food, and the polar lipid composition comprises more than 60%, preferably more than 90% of phospholipids on the basis of the total mass of the polar lipid composition; the phospholipids comprise 25-35% of phosphatidylcholine PC, 20-35% of phosphatidylethanolamine PE, 10-30% of phosphatidylinositol PI and 10-25% of sphingomyelin SM on the basis of the total mass of the phospholipids.

In one or more embodiments, the polar lipid composition further comprises sterols, or the polar lipid composition consists of phospholipids and sterols.

In one or more embodiments, the content of the sterols in the polar lipid composition is 8-40%, preferably 20-37% on the basis of the total mass of the lipid composition.

In one or more embodiments, the sterols comprise cholesterol and phytosterol.

In one or more embodiments, the mass ratio of the cholesterol to the phytosterol is 0.2-0.6, preferably 0.25-0.58.

In one or more embodiments, the phospholipids are one or more of vegetable-derived phospholipids and animal-derived phospholipids.

In one or more embodiments, the vegetable-derived phospholipids comprise one or more of soybean-derived phospholipids, sunflower seed-derived phospholipids, rapeseed-derived phospholipids, peanut-derived phospholipids, rice-derived phospholipids, rice bran-derived phospholipids, sesame-derived phospholipids, linseed-derived phospholipids, safflower seed-derived phospholipids, palm seed-derived phospholipids, and camellia seed-derived phospholipids.

In one or more embodiments, the animal-derived phospholipids comprise one or more of mammalian-derived phospholipids, ruminant-derived phospholipids, aquatic animal-derived phospholipids, and avian-derived phospholipids.

In one or more embodiments, the animal is an aquatic animal, including fish, shrimp, and shellfish.

In one or more embodiments, the fish comprises yellow croaker.

The second aspect of the present invention provides a grease composition. In terms of fatty acids in the grease composition, the content of saturated fatty acids is ≤ 45%, the content of monounsaturated fatty acids is ≤ 50%, and the content of polyunsaturated fatty acids is ≤ 30% on the basis of the total mass of fatty acids.

In one or more embodiments, in terms of fatty acids in the grease composition, the content of saturated fatty acids is 32-45%, preferably 32-38%, on the basis of the total mass of fatty acids.

In one or more embodiments, in terms of fatty acids in the grease composition, the content of monounsaturated fatty acids is 25-50%, preferably 30-45%, and more preferably 38-45%, on the basis of the total mass of fatty acids.

In one or more embodiments, in terms of fatty acids in the grease composition, the content of polyunsaturated fatty acids is 15-30%, preferably 18-23%, on the basis of the total mass of fatty acids.

In one or more embodiments, the content of solid fats in the grease composition at 30°C is no more than 7%.

In one or more embodiments, in terms of fatty acids in the grease composition, the mass ratio of oleic acids: palmitic acids: linoleic acids is (1.5-2.5): 1:(0.7-1.2), preferably (1.7-2.1):1:(0.7-1.0).

In one or more embodiments, in terms of fatty acids in the grease composition, the content of oleic acids is 25-45%, preferably 30-42%, and more preferably 38-42%.

In one or more embodiments, in terms of fatty acids in the grease composition, the content of palmitic acids is 18-25%, preferably 19-23%.

In one or more embodiments, the ratio of the Sn-2 palmitic acid to the total palmitic acids in the grease composition is at least 30%. Preferably, the ratio of the Sn-2 palmitic acid to the total palmitic acids in the grease composition is 30-60%, preferably 30-55%.

In one or more embodiments, in terms of fatty acids in the grease composition, the content of linoleic acids is 10-25%, preferably 13-20%, and more preferably 16-20%.

In one or more embodiments, the grease composition comprises one or more of a vegetable-derived modified or non-modified grease, an animal-derived modified or non-modified grease and a microbial-derived modified or non-modified grease.

In one or more embodiments, the vegetable-derived grease comprises a modified seed grease and/or a non-modified seed grease.

In one or more embodiments, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the modification comprises transesterification and/or fractionation.

In one or more embodiments, the animal-derived grease comprises one or more of a bovine milk-derived grease, a goat milk-derived grease, a buffalo milk-derived grease, a camel milk-derived grease, an aquatic animal-derived grease (such as krill oil and fish oil), and the grease in a bovine milk protein, the grease in a goat milk protein, the grease in a buffalo milk protein, and the grease in a camel milk protein.

In one or more embodiments, the animal-derived grease comprises a modified and/or a non-modified grease.

In one or more embodiments, the microbial-derived grease is selected from one or more of an algae oil and a fungal oil.

In one or more embodiments, the microbial-derived grease comprises a modified and/or a non-modified grease.

In one or more embodiments, the grease composition further comprises at least one DHA and ARA selected from an algae oil, a fish oil, a fungal oil, a microbial oil and a single cell oil, wherein the content the DHA or the content of the ARA is no more than 3% of total lipids.

In one or more embodiments, the grease composition comprises one or more of a rice oil, a structured fat, a bovine milk fat, a soybean oil, a coconut oil, a high oleic sunflower seed oil, a sunflower seed oil, a linseed oil, an ARA oil and a DHA algae oil.

In one or more embodiments, the grease composition comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil.

In one or more embodiments, the grease composition comprises or consists of a rice oil, a structured fat, a soybean oil, a coconut oil, a high oleic sunflower seed oil, a linseed oil, an ARA oil and a DHA algae oil; preferably, on the basis of the total weight of the grease composition, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease composition comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil.

In one or more embodiments, the grease composition comprises or consists of a structured fat, a bovine milk fat, a coconut oil, a high oleic sunflower seed oil, a sunflower seed oil, a linseed oil, an ARA oil and a DHA algae oil; preferably, on the basis of the total weight of the grease composition, the grease composition comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease composition comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil. Preferably, the structured fat is an OPO structured fat.

According to the third aspect of the present invention, an oil phase composition is provided, the oil phase composition comprises the polar lipid composition and the grease composition described in any embodiment herein.

In one or more embodiments, the oil phase composition further comprises an emulsifier.

In one or more embodiments, on the basis of the total weight of the oil phase composition, the content of the emulsifier is 8-12%.

In one or more embodiments, the emulsifier is a monoglyceride.

In one or more embodiments, on the basis of the total weight of the oil phase composition, the oil phase composition comprises 0.4-2.9%, preferably 0.4-1.8%, of phospholipids.

A fourth aspect of the present invention provides a structured emulsion, on the basis of the total mass of the structured emulsion, the structured emulsion comprises:

2-6% of the oil phase composition according to any embodiment of the present invention;
7-20% of a water-soluble composition; and
74-91% of water.

In one or more embodiments, in terms of fatty acids in the grease of the oil phase composition, the content of saturated fatty acids is $\leq 45\%$, the content of monounsaturated fatty acids is $\leq 50\%$, and the content of polyunsaturated fatty acids is $\leq 30\%$ on the basis of the total mass of fatty acids.

In one or more embodiments, in terms of fatty acids in the grease, the content of saturated fatty acids is 32-45%, preferably 32-38%, on the basis of the total mass of fatty acids.

In one or more embodiments, in terms of fatty acids in the grease, the content of monounsaturated fatty acids is 25-50%, preferably 30-45%, and more preferably 38-45%, on the basis of the total mass of fatty acids.

In one or more embodiments, in terms of fatty acids in the grease, the content of polyunsaturated fatty acids is 15-30%, preferably 18-23%, on the basis of the total mass of fatty acids.

In one or more embodiments, the content of solid fats in the grease at 30°C is no more than 7%.

In one or more embodiments, in terms of fatty acids in the grease, the mass ratio of oleic acids: palmitic acids: linoleic acids is (1.5-2.5):1:(0.7-1.2), preferably (1.7-2.1):1:(0.7-1.0).

In one or more embodiments, in terms of fatty acids in the grease, the content of oleic acids is 25-45%, preferably 30-42%, and more preferably 38-42%.

In one or more embodiments, in terms of fatty acids in the grease, the content of palmitic acids is 18-25%, preferably 19-23%.

In one or more embodiments, the ratio of the Sn-2 palmitic acid to the total palmitic acids in the grease is at least 30%. Preferably, the ratio of the Sn-2 palmitic acid to the total palmitic acids in the grease composition is 30-60%, preferably 30-55%.

In one or more embodiments, in terms of fatty acids in the grease, the content of linoleic acids is 10-25%, preferably 13-20%, and more preferably 16-20%.

In one or more embodiments, the grease comprises one or more of a vegetable-derived modified or non-modified grease, an animal-derived modified or non-modified grease and a microbial-derived modified or non-modified grease.

In one or more embodiments, the vegetable-derived grease comprises a modified seed grease and/or a non-modified seed grease.

In one or more embodiments, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the modification comprises transesterification and/or fractionation.

In one or more embodiments, the animal-derived grease comprises one or more of a bovine milk-derived grease, a goat milk-derived grease, a buffalo milk-derived grease, a camel milk-derived grease, an aquatic animal-derived grease (such as krill oil and fish oil), and the grease in a bovine milk protein, the grease in a goat milk protein, the grease in a buffalo milk protein, and the grease in a camel milk protein.

In one or more embodiments, the animal-derived grease comprises a modified and/or a non-modified grease.

In one or more embodiments, the microbial-derived grease is selected from one or more of an algae oil and a fungal oil.

In one or more embodiments, the microbial-derived grease comprises a modified and/or a non-modified grease.

In one or more embodiments, the grease further comprise at least one DHA and ARA selected from an algae oil, a fish oil, a fungal oil, a microbial oil and a single cell oil, wherein the content the DHA or the content of the ARA is no more than 3% of total lipids.

In one or more embodiments, the grease comprises one or more of a rice oil, a structured fat, a bovine milk fat, a soybean oil, a coconut oil, a high oleic sunflower seed oil, a sunflower seed oil, a linseed oil, an ARA oil and a DHA algae oil.

In one or more embodiments, the grease comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil.

In one or more embodiments, the grease comprises or consist of a rice oil, a structured fat, a soybean oil, a coconut oil, a high oleic sunflower seed oil, a linseed oil, an ARA oil and a DHA algae oil; preferably, on the basis of the total weight of the grease, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil. In one or more embodiments, the grease comprises or consist of a structured fat, a bovine milk fat, a coconut oil, a high oleic sunflower seed oil, a sunflower seed oil, a linseed oil, an ARA oil and a DHA algae oil; preferably, on the basis of the total weight of the grease, the grease comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil. Preferably, the structured fat is an OPO structured fat.

In one or more embodiments, on the basis of the total weight of phospholipids, the phospholipids comprise 25-35% of phosphatidylcholine (PC), 20-35% of phosphatidylethanolamine (PE), 10-25% of phosphatidyl inositol (PI) and 10-25% of sphingomyelin (SM).

In one or more embodiments, the structured emulsion comprises at least 0.1% of sphingomyelin on the basis of the total mass of the oil phase composition.

In one or more embodiments, the structured emulsion further comprises < 0.5% of sterols on the basis of the weight of total lipids.

In one or more embodiments, the sterols comprise cholesterol and phytosterol, wherein the mass ratio of the cholesterol to the phytosterol is 0.2-0.6, preferably 0.25-0.58.

In one or more embodiments, the oil phase composition further comprises glycolipids.

In one or more embodiments, the glycolipids comprise one or more of glyceroglycolipids, glycosphingolipids, and rhamnolipids derived from microorganism, seaweed, mammal, and plant cells.

In one or more embodiments, on the basis of the total mass of the water-soluble composition, the water-soluble composition comprises 12-18% of a protein, 60-75% of a digestible carbohydrate, 0.5-3% of a multivitamin mineral, 0.1-1% of a stabilizer and optionally ≤ 10% of an indigestible oligosaccharide.

In one or more embodiments, the protein is selected from at least one of the following proteins: a bovine milk- or goat milk-derived whey protein, casein, a legume-derived protein, a grain protein, and a partially or fully hydrolyzed protein from a bovine milk- or goat milk-derived whey protein, casein, or a soybean-derived protein.

In one or more embodiments, the legume-derived protein is selected from a soybean protein and/or a pea protein.

In one or more embodiments, the grain protein comprises one or more of a rice protein, a rice bran protein, a wheat protein, a rye protein, a sorghum protein, a corn protein, and an oat protein.

In one or more embodiments, the digestible carbohydrate is selected from at least one of a lactose, a glucose, a galactose, a maltose, a sucrose, a fructose, a starch, a maltodextrin, a glucose syrup, and a corn syrup; preferably, more than 60% of the digestible carbohydrate is the lactose.

In one or more embodiments, the stabilizer is selected from at least one of a carrageenan, a locust bean gum, a gellan gum, a xanthan gum, a gelatin, an acacia gum, and a soybean polysaccharide.

In one or more embodiments, the indigestible oligosaccharide is selected from at least one of a fructooligosaccharide, a galactooligosaccharide, a glucose oligosaccharide, a xylooligosaccharide, a mannan oligosaccharide and a cyclodextrin oligosaccharide.

In one or more embodiments, the vitamin mineral comprises at least one of vitamin A, vitamin D, vitamin E, vitamin K1, vitamin B1, vitamin B2, vitamin B6, vitamin B12, niacin, folic acid, pantothenic acid, vitamin C, biotin, sodium, potassium, copper, magnesium, iron, zinc, manganese, calcium, phosphorus, iodine, chlorine, selenium, choline, and inositol.

The fifth aspect of the present invention provides a structured emulsion, and on the basis of the total weight of the structured emulsion, the structured emulsion comprises:

> 0.01-0.15% of a vegetable phospholipid;
> 0.2-1.8% of an emulsifier;
> 1.5-5% of an grease;
> 1.5-3% of a skimmed milk powder;
> 0.5-1% of a whey protein powder;
> 0.1-0.4% of a cheese powder;
> 4-7% of a carbohydrate;
> 0.1-0.4% of a multivitamin mineral;
> 0.04-0.08% of a stabilizer; and
> 85-91% or the balance of water.

In one or more embodiments, the vegetable phospholipid is a sunflower phospholipid and/or a soybean phospholipid, preferably a sunflower phospholipid.

In one or more embodiments, in the structured emulsion, on the basis of the total weight of the phospholipids comprised in the structured emulsion, the content of phosphatidylcholine (PC) is 25-35%, and the content of phosphatidylethanolamine (PE) is 20-35%, the content of phosphatidylinositol (PI) is 10-25% and the content of sphingomyelin (SM) is 10-25%.

In one or more embodiments, the structured emulsion comprises sterols; Preferably, the content of the sterols is 0.2-0.3% on the basis of the total lipids comprised in the structured emulsion.

In one or more embodiments, the sterols comprise cholesterol and phytosterol.

In one or more embodiments, the mass ratio of the cholesterol to the phytosterol is 0.2-0.6, preferably 0.25-0.58.

In one or more embodiments, the content of the grease is 1.8-3.5%.

In one or more embodiments, in terms of fatty acids in the grease, the content of saturated fatty acids is $\leq 45\%$, the content of monounsaturated fatty acids is $\leq 50\%$, and the content of polyunsaturated fatty acids is $\leq 30\%$ on the basis of the total mass of fatty acids.

In one or more embodiments, in terms of fatty acids in the grease, the content of saturated fatty acids is 32-45%, preferably 32-38%, on the basis of the total mass of fatty acids.

In one or more embodiments, in terms of fatty acids in the grease, the content of monounsaturated fatty acids is 25-50%, preferably 30-45%, and more preferably 38-45%, on the basis of the total mass of fatty acids.

In one or more embodiments, in terms of fatty acids in the grease, the content of polyunsaturated fatty acids is 15-30%, preferably 18-23%, on the basis of the total mass of fatty acids.

In one or more embodiments, the content of solid fats in the grease at 30°C is no more than 7%.

In one or more embodiments, in terms of fatty acids in the grease, the mass ratio of oleic acids: palmitic acids: linoleic acids is (1.5-2.5):1:(0.7-1.2), preferably (1.7-2.1):1:(0.7-1.0).

In one or more embodiments, in terms of fatty acids in the grease, the content of oleic acids is 25-45%, preferably 30-42%, and more preferably 38-42%.

In one or more embodiments, in terms of fatty acids in the grease, the content of palmitic acids is 18-25%, preferably 19-23%.

In one or more embodiments, the ratio of the Sn-2 palmitic acid to the total palmitic acids in the grease is at least 30%. Preferably, the ratio of the Sn-2 palmitic acid to the total palmitic acids in the grease composition is 30-60%, preferably 30-55%.

In one or more embodiments, in terms of fatty acids in the grease, the content of linoleic acids is 10-25%, preferably 13-20%, and more preferably 16-20%.

In one or more embodiments, the grease comprises one or more of a vegetable-derived modified or non-modified grease, an animal-derived modified or non-modified grease and a microbial-derived modified or non-modified grease.

In one or more embodiments, the vegetable-derived grease comprises a modified seed grease and/or a non-modified seed grease.

In one or more embodiments, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the modification comprises transesterification and/or fractionation.

In one or more embodiments, the animal-derived grease comprises one or more of a bovine milk-derived grease, a goat milk-derived grease, a buffalo milk-derived grease, a camel milk-derived grease, an aquatic animal-derived grease (such as krill oil and fish oil), and the grease in a bovine milk protein, the grease in a goat milk protein, the grease in a buffalo milk protein, and the grease in a camel milk protein.

In one or more embodiments, the animal-derived grease comprises a modified and/or a non-modified grease.

In one or more embodiments, the microbial-derived grease is selected from one or more of an algae oil and a fungal oil.

In one or more embodiments, the microbial-derived grease comprises a modified and/or a non-modified grease.

In one or more embodiments, the grease further comprise at least one DHA and ARA selected from an algae oil, a fish oil, a fungal oil, a microbial oil and a single cell oil, wherein the content the DHA or the content of the ARA is no more than 3% of total lipids.

In one or more embodiments, the grease comprises one or more of a rice oil, a structured fat, a bovine milk fat, a soybean oil, a coconut oil, a high oleic sunflower seed oil, a sunflower seed oil, a linseed oil, an ARA oil and a DHA algae oil.

In one or more embodiments, the grease comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil.

In one or more embodiments, the grease comprises or consist of a rice oil, a structured fat, a soybean oil, a coconut oil, a high oleic sunflower seed oil, a linseed oil, an ARA oil and a DHA algae oil; preferably, on the basis of the total weight of the grease, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil. In one or more embodiments, the grease comprises or consist of a structured fat, a bovine milk fat, a coconut oil, a high oleic sunflower seed oil, a sunflower seed oil, a linseed oil, an ARA oil and a DHA algae oil; preferably, on the basis of the total weight of the grease, the grease comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil. Preferably, the structured fat is an OPO structured fat.

In one or more embodiments, the cheese powder is a bovine milk cheese powder.

In one or more embodiments, the carbohydrate is selected from at least one of a lactose, a glucose, a galactose, a maltose, a sucrose, a fructose, a starch, a maltodextrin, a glucose syrup and a corn syrup; preferably, more than 60% of the digestible carbohydrate is the lactose.

In one or more embodiments, the stabilizer is selected from at least one of a carrageenan, a locust bean gum, a gellan gum, a xanthan gum, a gelatin, an acacia gum, and a soybean polysaccharide.

In one or more embodiments, the vitamin mineral comprises at least one of vitamin A, vitamin D, vitamin E, vitamin K1, vitamin B1, vitamin B2, vitamin B6, vitamin B12, niacin, folic acid, pantothenic acid, vitamin C, biotin, sodium, potassium, copper, magnesium, iron, zinc, manganese, calcium, phosphorus, iodine, chlorine, selenium, choline, and inositol.

In one or more embodiments, the emulsifier is a monoglyceride.

In one or more embodiments, in the structured emulsion, the content of the oil-soluble component is 2-6%, the content of the water-soluble component is 7-20%, and the content of water is 74-91%.

In one or more embodiments, the oil-soluble components comprise a grease, a phospholipid, and an emulsifier.

In one or more embodiments, the water-soluble component comprises: a protein, a carbohydrate, a multivitamin mineral and a stabilizer.

In one or more embodiments, on the basis of the total mass of the water-soluble component, the water-soluble component comprises 12-18% of a protein, 60-75% of a digestible carbohydrate, 0.5-3% of a multivitamin mineral and 0.1-1% of a stabilizer.

The sixth aspect of the present invention provides a structured emulsion, and on the basis of the total weight of the structured emulsion, the structured emulsion comprises: 0.004-0.15% of a vegetable phospholipid; 0.2-1.8% of an emulsifier; 1.5-5%, preferably 1.8-3.5% of a grease composition; 1.5-3% of a skimmed milk powder; 0.5-1% of a whey protein powder; 0.01-0.1% of an animal phospholipid; 4-7% of a carbohydrate; 0.1-0.4% of a multivitamin mineral; 0.04-0.08% of a stabilizer; and the balance of water.

In one or more embodiments, the vegetable phospholipid is derived from a vegetable phospholipid product, and the vegetable phospholipid product is a sunflower phospholipid and/or a soybean phospholipid, preferably a sunflower phospholipid; preferably, in the structured emulsion, on the basis of the total weight of the phospholipids comprised in the structured emulsion, the content of phosphatidylcholine (PC) is 25-35 wt%, and the content of phosphatidylethanolamine (PE) is 20-35 wt%, the content of phosphatidylinositol (PI) is 10-25 wt% and the content of sphingomyelin (SM) is 10-25 wt%.

In one or more embodiments, the structured emulsion comprises sterols; preferably, the content of the sterols is 0.2-0.3% on the basis of the total lipids comprised in the structured emulsion; preferably, the mass ratio of cholesterol to phytosterol in the sterols is 0.2-0.6, preferably 0.25-0.58.

In one or more embodiments, in terms of fatty acids in the grease composition, the content of saturated fatty acids is ≤ 45 wt%, the content of monounsaturated fatty acids is ≤ 50 wt%, and the content of polyunsaturated fatty acids is ≤ 30 wt% on the basis of the total mass of fatty acids; preferably, the content of solid fats in the grease component at 30°C is no more than 7%; preferably, in terms of fatty acids in the grease component, the mass ratio of oleic acids: palmitic acids: linoleic acids is (1.5-2.5):1:(0.7-1.2), preferably (1.7-2.1):1:(0.7-1.0).

In one or more embodiments, in terms of fatty acids in the grease composition, the content of oleic acids is 25-45 wt%, preferably 30-42 wt%, and more preferably 38-42 wt%; the content of palmitic acids is 18-25 wt%, preferably 19-23%; The content of linoleic acids is 10-25 wt%, preferably 13-20 wt%, and more preferably 16-20 wt%.

In one or more embodiments, the ratio of the Sn-2 palmitic acid to the total palmitic acids in the grease composition is at least 30 wt%; preferably 30-60 wt%.

In one or more embodiments, the grease composition comprises one or more of a vegetable-derived modified or non-modified grease, an animal-derived modified or non-modified grease and a microbial-derived modified or non-modified grease.

In one or more embodiments, the vegetable-derived grease comprises a modified seed grease and/or a non-modified seed grease.

In one or more embodiments, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the modification comprises transesterification and/or fractionation.

In one or more embodiments, the animal-derived grease comprises one or more of a bovine milk-derived grease, a goat milk-derived grease, a buffalo milk-derived grease, a camel milk-derived grease, an aquatic animal-derived grease (such as krill oil and fish oil), and the grease in a bovine milk protein, the grease in a goat milk protein, the grease in a buffalo milk protein, and the grease in a camel milk protein.

In one or more embodiments, the animal-derived grease comprises a modified and/or a non-modified grease.

In one or more embodiments, the microbial-derived grease is selected from one or more of an algae oil and a fungal oil.

In one or more embodiments, the microbial-derived grease comprises a modified and/or a non-modified grease.

In one or more embodiments, the grease composition further comprises at least one DHA and ARA selected from an algae oil, a fish oil, a fungal oil, a microbial oil and a single cell oil, wherein the content the DHA or the content of the ARA is no more than 3% of total lipids.

In one or more embodiments, the grease composition comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil; preferably, the grease comprises or consist of a rice oil, a structured fat, a soybean oil, a coconut oil, a high oleic sunflower seed oil, a linseed oil, an ARA oil and a DHA algae oil, preferably, on the basis of the total weight of the grease component, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae oil is 0.5-1.5%, and more preferably, the grease component comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil; or preferably, the grease component comprises or consists of a structured fat, a bovine milk fat, a coconut oil, a high oleic sunflower seed oil, a sunflower seed oil, a linseed oil, an ARA oil and a DHA algae oil, preferably, on the basis of the total weight of the grease component, the grease component comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil, more preferably, the grease component comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil; preferably, the structured fat is OPO structured fat.

In one or more embodiments, the grease composition further includes glycolipids.

In one or more embodiments, the glycolipids comprise one or more of glyceroglycolipids, glycosphingolipids, and rhamnolipids derived from microorganism, seaweed, mammal, and plant cells.

In one or more embodiments, on the basis of the total mass of the water-soluble composition, the water-soluble composition comprises 12-18 wt% of a protein, 60-75 wt% of a digestible carbohydrate, greater than 1.0 wt%, preferably 1.2- 3 wt% of a multivitamin mineral, 0.1-1 wt% of a stabilizer and optionally ≤ 10 wt% of an indigestible oligosaccharide.

In one or more embodiments, the protein is selected from at least one of the following proteins: a bovine milk- or goat milk-derived whey protein, casein, a legume-derived protein, a grain protein, and a partially or fully hydrolyzed protein from a bovine milk- or goat milk-derived whey protein, casein, or a soybean-derived protein.

In one or more embodiments, the legume-derived protein is selected from a soybean protein and/or a pea protein.

Preferably, the grain protein comprises one or more of a rice protein, a rice bran protein, a wheat protein, a rye protein, a sorghum protein, a corn protein, and an oat protein.

In one or more embodiments, the digestible carbohydrate is selected from at least one of a lactose, a glucose, a galactose, a maltose, a sucrose, a fructose, a starch, a maltodextrin, a glucose syrup, and a corn syrup; preferably, more than 60% of the digestible carbohydrate is the lactose.

In one or more embodiments, the stabilizer is selected from at least one of a carrageenan, a locust bean gum, a gellan gum, a xanthan gum, a gelatin, an acacia gum, and a soybean polysaccharide.

In one or more embodiments, the indigestible oligosaccharide is selected from at least one of a fructooligosaccharide, a galactooligosaccharide, a glucose oligosaccharide, a xylooligosaccharide, a mannan oligosaccharide and a cyclodextrin oligosaccharide.

In one or more embodiments, the vitamin mineral comprises at least one of vitamin A, vitamin D, vitamin E, vitamin K1, vitamin B1, vitamin B2, vitamin B6, vitamin B12, niacin, folic acid, pantothenic acid, vitamin C, biotin, sodium, potassium, copper, magnesium, iron, zinc, manganese, calcium, phosphorus, iodine, chlorine, selenium, choline, and inositol.

A seventh aspect of the present invention provides a method for preparing a structured emulsion, the method for preparing the structured emulsion comprises the following steps:

(1) mixing an oil-soluble component to provide an oil phase composition;
(2) mixing a water-soluble component with water to obtain a water phase composition; and
(3) emulsifying the oil phase composition and the water phase composition to obtain the structured emulsion.

In one or more embodiments, the method further comprises sterilizing the emulsion.

In one or more embodiments, the step (3) comprises: mixing the oil phase composition and the water phase, and emulsifying same by one or more methods of a shear emulsification, a colloid mill emulsification, a ball mill emulsification, a ultrasonic emulsification, a membrane emulsification, a microwave emulsification, a sonic emulsification or a self-emulsification.

In one or more embodiments, the shear emulsification is used, and the shear rate is 3000-20000 rpm and the shear time is 1-15 min; preferably, the shear rate is 3000-10000 rpm, and the shear time is 1-5 min.

In one or more embodiments, the ultrasonic emulsification is used, and the ultrasonic power density is 60-300 W/cm$^2$ and the ultrasonic treatment time is 1-20 min.

In one or more embodiments, the step (3) comprises: mixing the oil phase composition and the water phase, and then subjecting same to shearing, homogenization and/or microjet emulsification. In one or more embodiments, the shear rate is 3000-20000 rpm, and the shear time is 1-15 min; the micro-jet has a pressure of 10-600 bars, and performed for more than 3 cycles; the homogenization has a pressure of 10-600 bars, and performed for more than 3 cycles.

In one or more embodiments, the step (3) comprises: mixing the oil phase composition and the water phase to perform a dual-channel or multi-channel microfluidic treatment, or directly performing a dual-channel or multi-channel microfluidic treatment on the oil phase composition and the water phase without premixing.

In one or more embodiments, the oil phase composition and the water phase are mixed at a temperature of 33-38°C (for example, under a water bath at this temperature) and stirred for less than 20 min, and then sheared and homogenized; preferably, the shear rate is ≤ 4000 rpm, and the pressure for the homogenization is ≤ 20 bars.

In one or more embodiments, the oil phase composition and the water phase are mixed at room temperature, and then sheared and homogenized; preferably, the shear rate is ≥ 8000 rpm and the pressure for the homogenization is ≥ 150 bars.

In one or more embodiments, the sterilization is pasteurization or high temperature instantaneous sterilization or ultrahigh pressure sterilization.

In one or more embodiments, the primary emulsion is kept at 60°C-85°C for 15s - 30 min for pasteurization.

In one or more embodiments, the step (4) is to keep the primary emulsion at 110°C-140°C for 1-30 S for high temperature instantaneous sterilization.

In one or more embodiments, the step (4) is to keep the primary emulsion under a pressure of 100-800 MPa for 5-30 min for ultrahigh pressure sterilization.

In one or more embodiments, the step (1) is to mix the phospholipid and the grease composition and stir the obtained mixture under a water bath at 60+/-5°C to form an oil phase.

In one or more embodiments, the step (2) is to mix the water-soluble component with water, and stir the obtained mixture under a water bath below 35°C to form a water phase; wherein, the water-soluble component comprises a protein, a carbohydrate, a complex microbial mineral and a stabilizer.

In one or more embodiments, the structured emulsion is as described in any one of the fourth and fifth aspects of the present invention.

An eighth aspect of the present invention provides a method for preparing a structured emulsion, the method comprises the following steps:

> (1) providing an oil phase composition;
> (2) mixing a vegetable phospholipid and water, then adding an animal phospholipid, stirring same evenly, and then adding a water-soluble ingredient to obtain a water phase composition;
> (3) emulsifying the oil phase composition and the water phase composition to obtain the structured emulsion.

In one or more embodiments, the method further comprises step (4): sterilizing the emulsion obtained in step (3).

In one or more embodiments, the water-soluble substance comprises a protein, a carbohydrate, a oligosaccharide, a multivitamin mineral, and a stabilizer.

In one or more embodiments, the method further comprises sterilizing the emulsion.

In one or more embodiments, the step (2) comprises: mixing a vegetable phospholipid and water, stirring the obtained mixture at room temperature for 2 h, and then adding an animal phospholipid, stir same evenly, and then adding other water-soluble substances, stir same under a water bath below 35°C to form a water phase composition.

In one or more embodiments, the step (3) comprises: mixing the oil phase composition and the water phase, and emulsifying same by one or more methods of a shear emulsification, a colloid mill emulsification, a ball mill emulsification, a ultrasonic emulsification, a membrane emulsification, a microwave emulsification, a sonic emulsification or a self-emulsification.

In one or more embodiments, the shear emulsification is used, and the shear rate is 3000-20000 rpm and the shear time is 1-15 min.

In one or more embodiments, the ultrasonic emulsification is used, and the ultrasonic power density is 60-300 W/cm$^2$ and the ultrasonic treatment time is 1-20 min.

In one or more embodiments, the step (3) comprises: mixing the oil phase composition and the water phase, and then subjecting same to shearing, homogenization and/or micro-jet emulsification. Preferably, the shear rate is 3000-20000 rpm, and the shear time is 1-15 min; the micro-jet has a pressure of 10-600 bars, and performed for more than 3 cycles; the homogenization has a pressure of 10-600 bars, and performed for more than 3 cycles.

In one or more embodiments, the step (3) comprises: mixing the oil phase composition and the water phase to perform a dual-channel or multi-channel microfluidic treatment, or directly performing a dual-channel or multi-channel microfluidic treatment on the oil phase composition and the water phase without premixing.

In one or more embodiments, the oil phase composition and the water phase are mixed under a water bath below 35°C and stirred for less than 20 min, and then sheared and homogenized; preferably, the shear rate is ≤ 4000 rpm, and the pressure for the homogenization is ≤ 20 bars.

In one or more embodiments, the sterilization is pasteurization or high temperature instantaneous sterilization or ultrahigh pressure sterilization.

In one or more embodiments, the emulsion is kept under a water bath at 60°C-85°C for 15 s-30 min for pasteurization.

In one or more embodiments, the step (4) is to keep the emulsion at 110°C-140°C for 1-30 S for high temperature instantaneous sterilization.

In one or more embodiments, the step (4) is to keep the emulsion under a pressure of 100-800 MPa for 5-30 min for ultrahigh pressure sterilization.

In one or more embodiments, in the step (3), the oil phase and the water phase are mixed by stirring under a water bath lower than 35°C for less than 20 min.

In one or more embodiments, in terms of fatty acids in the grease composition, the content of saturated fatty acids is ≤ 45 wt%, the content of monounsaturated fatty acids is ≤ 50 wt%, and the content of polyunsaturated fatty acids is ≤ 30 wt% on the basis of the total mass of fatty acids; preferably, the content of solid fats in the grease composition at 30°C is no more than 7%; preferably, in terms of fatty acids in the grease composition, the mass ratio of oleic acids: palmitic acids: linoleic acids is (1.5-2.5):1:(0.7-1.2), preferably (1.7-2.1):1:(0.7-1.0).

In one or more embodiments, in terms of fatty acids in the grease composition, the content of oleic acids is 25-45 wt%, preferably 30-42 wt%, and more preferably 38-42 wt%; the content of palmitic acids is 18-25 wt%, preferably 19-23%; The content of linoleic acids is 10-25 wt%, preferably 13-20 wt%, and more preferably 16-20 wt%.

In one or more embodiments, the ratio of the Sn-2 palmitic acid to the total palmitic acids in the grease composition is at least 30 wt%; preferably 30-60 wt%.

In one or more embodiments, the grease composition comprises one or more of a vegetable-derived modified or non-modified grease, an animal-derived modified or non-modified grease and a microbial-derived modified or non-modified grease.

In one or more embodiments, the vegetable-derived grease comprises a modified seed grease and/or a non-modified seed grease.

In one or more embodiments, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the modification comprises transesterification and/or fractionation.

In one or more embodiments, the animal-derived grease comprises one or more of a bovine milk-derived grease, a goat milk-derived grease, a buffalo milk-derived grease, a camel milk-derived grease, an aquatic animal-derived grease (such as krill oil and fish oil), and the grease in a bovine milk protein, the grease in a goat milk protein, the grease in a buffalo milk protein, and the grease in a camel milk protein.

In one or more embodiments, the animal-derived grease comprises a modified and/or a non-modified grease.

In one or more embodiments, the microbial-derived grease is selected from one or more of an algae oil and a fungal oil.

In one or more embodiments, the microbial-derived grease comprises a modified and/or a non-modified grease.

In one or more embodiments, the grease composition further comprises at least one DHA and ARA selected from an algae oil, a fish oil, a fungal oil, a microbial oil and a single cell oil, wherein the content the DHA or the content of the ARA is no more than 3% of total lipids.

In one or more embodiments, the grease composition comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil; preferably, the grease comprises or consist of a rice oil, a structured fat, a soybean oil, a coconut oil, a high oleic sunflower seed oil, a linseed oil, an ARA oil and a DHA algae oil, preferably, on the basis of the total weight of the grease component, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae oil is 0.5-1.5%, and more preferably, the grease component comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil; or preferably, the grease component comprises or consists of a structured fat, a bovine milk fat, a coconut oil, a high oleic sunflower seed oil, a sunflower seed oil, a linseed oil, an ARA oil and a DHA algae oil, preferably, on the basis of the total weight of the grease component, the grease component comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil, more preferably, the grease component comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil; preferably, the structured fat is OPO structured fat.

A ninth aspect of the present invention provides a method for preparing a powder composition, the method comprises the steps of:

(1) providing the structured emulsion described in any embodiment herein or the structured emulsion prepared by the method described in any embodiment herein;
(2) drying the structured emulsion.

In one or more embodiments, the drying comprises: one or more of spray drying, vacuum freeze drying, or cold air spray drying.

In one or more embodiments, when the spray drying is used, the inlet air temperature is 120-200°C, and the outlet air temperature is 60-110°C.

In one or more embodiments, when the cold air spray drying is used, the inlet air temperature is 70-110°C, and the outlet air temperature is 35-50°C.

In one or more embodiments, the structured emulsion is as described in any one of the fourth and fifth aspects of the present invention.

The eighth aspect of the present invention provides a food composition, the food composition comprises the polar lipid composition of the present invention; or comprises the grease composition of the present invention; or comprises the oil phase composition of the present invention; or comprises the structured emulsion of the present invention; or comprises the structured emulsion prepared by the method of the present invention; or comprises the powder composition prepared by the method of the present invention.

In one or more embodiments, the food composition is in the form of an emulsion or a powder.

In one or more embodiments, the food composition is in the form of a tablet, or a block, or a capsule, or a pill, or a semi-emulsion.

In one or more embodiments, the food composition is a nutritional fortifier.

A ninth aspect of the present invention provides a method for promoting digestion and absorption of an animal, the method is to use the food described in the present invention as part or all of the food ingested by the animal.

In one or more preferred embodiments, the animal comprises a mammal and a ruminant. Preferably, the mammal is a human.

In one or more preferred embodiments, the human comprises an infant, a pregnant women, a middle-aged and elderly people, and people with weakened immunity.

Detailed Description of Embodiments

In order to make the features and effects of the present invention understandable to a person skilled in the art, the terms and words mentioned in the description and claims will be generally described and defined hereafter. Unless otherwise stated, all the technical and scientific words used herein possess the general meaning as known by a person skilled in the art for the present invention. The definition in the present invention is preferential, if a conflict exists.

The theories and mechanisms described and disclosed herein, regardless of their correctness, should not limit the scope of the present invention in any way, that is, the present invention can be embodied without being limited to any specific theory and mechanism.

All features which are defined herein by value ranges or percentage ranges, such as quantity, content and concentration, are only for the sake of briefness and convenience. Thus, the description of a value range or a percentage range should be considered as covering and particularly disclosing all possible sub-ranges and individual values in the range (including integral numbers and fractions).

For the sake of briefness, not all the possible combinations of the technical features in the embodiments or examples are described herein. Therefore, the technical features of the embodiments and examples can be combined as desire, as long as there is no contradiction in the combination of technical features, and all possible combinations should be considered as being covered by the scope of the description.

Polar lipid composition

The present invention provides a polar lipid composition for a formula food. Herein, the formula food has the meaning well known in the art. In some embodiments, the formula food is an infant formula food, or a complete nutrition formula food, or a special medical purpose formula food.

The polar lipid composition of the present invention comprises a phospholipid. Herein, the phospholipid component in the polar lipid composition may be a phospholipid in a vegetable-derived phospholipid product and/or an animal-derived phospholipid product. The vegetable-derived phospholipid product may comprise one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product.

In some embodiments, the phospholipid in the polar lipid composition of the present invention is sunflower phospholipid and/or soybean phospholipid, and also comprises sphingomyelin.

In some embodiments, the phospholipid product is sunflower phospholipid and/or soybean phospholipid, and also comprises an animal phospholipid.

The animal-derived phospholipid product comprises a terrestrial animal-derived phospholipid product, such as egg phospholipid, and aquatic animal-derived phospholipid product, such as fish-, shrimp-, and shellfish-derived phospholipid product. The fish may be, for example, yellow croaker. In some embodiments, the animal phospholipid product is a bovine milk-derived phospholipid; more preferably, the animal phospholipid is derived from one or more of cheese powder, MFGM and concentrated bovine milk phospholipid powder.

The polar lipid compositions of the present invention may be prepared using one or more phospholipid products from the same source and/or from different sources. Typically, on the basis of the total mass, the polar lipid composition of the present invention may comprise more than 60%, preferably more than 70%, and more preferably more than 80%, and more preferably more than 90% of the phospholipid component.

In a preferred embodiment, the polar lipid composition of the present invention comprises phosphatidylcholine PC, phosphatidylethanolamine PE, phosphatidylinositol PI and sphingomyelin SM. Typically, on the basis of the total mass of phospholipids, the phospholipids comprise 25-35% of phosphatidylcholine PC, 20-35% of phosphatidylethanolamine PE, 10-30% of phosphatidylinositol PI, and 10-25% of sphingomyelin SM. On the basis of the total mass of phospholipids, the preferred content of PC is 28-33%, the preferred content of PE is 23-30%, the preferred content of PI is 15-20%, and the preferred content of SM is 10-15%. Preferably, on the basis of the total mass of phospholipids, the content of PC is 31-32%; the content of PE is 26-27%; the content of PI is 16.5-17.5%; the content of SM is 12-13%.

The polar lipid composition of the present invention further comprises sterols. The sterol may be cholesterol and/or phytosterol, preferably a mixture of cholesterol and phytosterol. On the basis of the total mass of the lipid composition, the content of the sterols in the polar lipid composition may be 8-40%, such as 20-37%. When using a mixture of cholesterol and phytosterol, the mass ratio of cholesterol to phytosterol may be 0.2-0.6, preferably 0.25-0.58.

In some embodiments of the present invention, the polar lipid composition comprises phospholipids and sterols. More specifically, some polar lipid compositions of the present invention comprise phosphatidylcholine PC, phosphatidylethanolamine PE, phosphatidylinositol PI and sphingomyelin SM as well as cholesterol and phytosterol. In these embodiments, on the basis of the total mass of phospholipids, the content of the phosphatidylcholine is 25-35%, preferably 28-33%, the content of the phosphatidylethanolamine is 20-35%, preferably 23-30%, and the content of the phosphatidylinositol is 10-30%, preferably 15-20%, and the content of the sphingomyelin is 10-25%, preferably 10-15%; on the basis of the total mass of the polar lipid composition, the total content of cholesterol and phytosterol is 8-40%, preferably 20-37%, and the mass ratio of cholesterol to phytosterol is 0.2-0.6, preferably 0.25-0.58.

The polar lipid composition of the present invention may be provided by using a mixture of one or more vegetable phospholipid products and one or more animal phospholipid products. Preferably, the vegetable phospholipid product comprises a sunflower phospholipid or a soybean phospholipid, and the animal phospholipid product comprises a cheese powder, a MFGM, a concentrated bovine milk phospholipid powder or a bovine milk sphingomyelin. Preferably in the polar lipid composition, the mass ratio of the vegetable phospholipid to the animal phospholipid is 0.1-2:1. In some preferred embodiments, the polar lipid composition of the present invention comprises a sunflower phospholipid and a cheese powder (preferably a bovine cheese powder). Preferably, the mass ratio of the animal phospholipid product to the vegetable phospholipid product can be in a range of (9-12):1.

Oil and fat composition

The present invention further provides a grease composition used as a nutritional composition. In terms of fatty acids in the grease composition, the content of saturated fatty acids (SFAs) is $\leq 45\%$, the content of monounsaturated fatty acids (MUFAs) is $\leq 50\%$, and the content of polyunsaturated fatty acids (PUFAs) is $\leq 30\%$. In terms of fatty acids in the grease composition, the range of the content of SFAs can be in a range of 32-45%, preferably in a range of 32-38% or 38-45%; the content of monounsaturated fatty acids may be in a range of 25-50%, preferably 30-45%, and more preferably 38-45%; the content of polyunsaturated fatty acids may be in a range of 15-30%, preferably 20-25% or 18-23%.

Preferably, the fatty acids in the grease composition of the present invention comprises oleic acid, palmitic acid and linoleic acid. Preferably, in terms of fatty acids in the grease composition of the present invention, the content of oleic acids is 25-45%, preferably 30-42%, and more preferably 38-42%; the content of palmitic acids is 18-25%, preferably 19-23%; the content of linoleic acids is 10-25%, preferably 13-20%, and more preferably 16-20%. Preferably, the mass ratio of oleic acid:palmitic acid:linoleic acid is (1.5-2.5):1:(0.7-1.3), preferably (1.5-2.5):1:(0.8-1.3) or (1.5-2.5):1:(0.7-1.2), and more preferably (1.7-2.1):1:(0.7-1.0).

Preferably, the ratio of the Sn-2 palmitic acid to the total palmitic acids in the grease composition is at least 30%. Preferably, the ratio of the Sn-2 palmitic acid to the total palmitic acids in the grease composition is 30-60%, preferably 30-55%.

The grease composition of the present invention may comprise one or more of vegetable-derived, animal-derived and microbial-derived modified (for example, transesterified and/or fractionated) grease or non-modified grease, the vegetable-derived grease may be seed grease, including but not limited to one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil and a cottonseed oil, a mango kernel oil, an avocado kernel oil, a shea nut oil, and an illipe butter. In the present invention, the animal-derived grease comprises one or more of a bovine milk-derived grease, a goat milk-derived grease, a buffalo milk-derived grease, a camel milk-derived grease, an aquatic animal-derived grease (such as fish oil and krill oil), and one or more of the grease in a bovine milk protein, the grease in a goat milk protein, the grease in a buffalo milk protein, and the grease in a camel milk protein. The microbial-derived grease comprises one or more of an algae oil and a fungal oil.

In some embodiments, the grease composition of the present invention comprises one or more of a rice oil, a structured fat, a bovine milk fat, a soybean oil, a coconut oil, a high oleic sunflower seed oil, a sunflower seed oil, a linseed oil, an ARA oil and a DHA algae oil. Preferably, the grease composition of the present invention comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil. Preferably, the structured fat is an OPO structured fat.

In some preferred embodiments, the grease composition comprises or consists of a rice oil, a structured fat, a soybean oil, a coconut oil, a high oleic sunflower seed oil, a linseed oil, an ARA oil and a DHA algae oil; preferably, on the basis of the total weight of the grease composition, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease composition comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil.

In some preferred embodiments, the grease composition comprises or consists of a structured fat, a bovine milk fat, a coconut oil, a high oleic sunflower seed oil, a sunflower seed oil, a linseed oil, an ARA oil and a DHA algae oil; preferably, on the basis of the total weight of the grease composition, the grease composition comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease composition comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil.

Typically, the content of solid fats in the grease composition of the present invention at 30°C is no more than 7%, for example between 5-6.5%.

The grease composition of the present invention is particularly suitable for use in formulating the structured emulsion described herein.

Oil phase composition

The present invention also provides an oil phase composition, which comprises the polar lipid composition and the grease composition described herein. Preferably, on the basis of the total lipid mass comprised in the oil phase composition, the oil phase composition comprises 0.4-2.9%, preferably 0.4-1.8%, of the phospholipids in the polar lipid composition described herein.

In a preferred embodiment, the grease composition comprises one or more of a rice oil, a structured fat, a bovine milk fat, a soybean oil, a coconut oil, a high oleic sunflower seed oil, a sunflower seed oil, a linseed oil, an ARA oil and a DHA algae oil. Preferably, the grease composition of the present invention comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil. Preferably, the structured fat is an OPO structured fat. In some preferred embodiments, the grease composition comprises or consists of a rice oil, a structured fat, a soybean oil, a coconut oil, a high oleic sunflower seed oil, a linseed oil, an ARA oil and a DHA algae oil; preferably, on the basis of the total weight of the grease composition, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease composition comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil. In some preferred embodiments, the grease composition comprises or consists of a structured fat, a bovine milk fat, a coconut oil, a high oleic sunflower seed oil, a sunflower seed oil, a linseed oil, an ARA oil and a DHA algae oil; preferably, on the basis of the total weight of the grease composition, the grease composition comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease composition comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil.

In some embodiments, the oil phase composition comprises sterols. On the basis of the total lipid of the oil phase composition, the content of the sterols is 0.1-0.5%, preferably 0.15-0.30%. Preferably, the sterols comprise cholesterol and phytosterol. Preferably, the mass ratio of the cholesterol to the phytosterol is 0.2-0.6, preferably 0.25-0.58.

The oil phase composition may further comprise other ingredients conventionally added to the grease composition, including an emulsifier, a stabilizer, and the like. For example, in some embodiments, on the basis of the total mass of the oil phase composition, the oil phase composition may comprise 8-12% of an emulsifier, such as monoglycerin, lecithin, mono-diglyceride citrate, or any combination thereof.

In some embodiments, the oil phase composition of the present invention may further comprise glycolipids. Suitable glycolipids comprise, but are not limited to a glycolipid derived from microorganism, seaweed, mammal, and plant cells, such as one or more of a glyceroglycolipid, a glycosphingolipid, and a rhamnolipid. When comprised, the amount of the glycolipids may be more than 3.0% on the basis of the total mass of the oil phase composition.

Structured emulsion

The present invention provides a structured emulsion comprising the oil phase composition described herein, a water-soluble ingredient, and water. The water-soluble ingredient that can be used in the structured emulsion of the present invention can be a water-soluble ingredient conventionally used in the art to prepare a structured emulsion, including but not limited to a protein, a carbohydrate, a complex microbial minerals, and a stabilizer.

The protein can be a protein that is conventionally added to formula milk, including but not limited to a bovine milk- or goat milk-derived whey protein, casein, a legume-derived protein, a grain protein, and a partially or fully hydrolyzed protein from a bovine milk- or goat milk-derived whey protein, casein, or a soybean-derived protein. The legume-derived protein may be selected from a soybean protein and/or a pea protein. The grain protein includes, but are not limited to one or more of a rice protein, a rice bran protein, a wheat protein, a rye protein, a sorghum protein, a corn protein, and an oat protein. The content of the protein is typically 12-18% in the water-soluble ingredient of the present invention.

The protein in the water-soluble component may be derived from a skim milk powder, a whey protein powder and a cheese powder. The structured emulsion of the present invention may be formulated using skim milk powder, whey protein powder and cheese powder which are known in the art for use in infant formula. A preferred cheese powder is a bovine cheese powder.

The carbohydrate comprises a digestible carbohydrate and an indigestible carbohydrate. The digestible carbohydrate is typically a sugars conventionally added to formula milk powder, including but not limited to at least one of a lactose, a glucose, a galactose, a maltose, a sucrose, a fructose, a starch, a maltodextrin, a glucose syrup and a corn syrup. Preferably, more than 60% of the digestible carbohydrate is the lactose. The indigestible carbohydrate is typically an indigestible oligosaccharide which comprises at least one of a fructooligosaccharide, a galactooligosaccharide, a glucose oligosaccharide, a xylooligosaccharide, a mannan oligosaccharide and a cyclodextrin oligosaccharide. In the water-soluble ingredient of the present invention, the total content of the digestible carbohydrate is typically 60-75%, preferably 60-70%, and the total content of the indigestible carbohydrate is $\leq$ 10%.

In the present invention, the vitamin comprises one or more of vitamin A, vitamin D, vitamin E, vitamin K1, vitamin B1, vitamin B2, vitamin B6, vitamin B12, niacin, folic acid, pantothenic acid, vitamin C and biotin, the mineral comprises at least one of sodium, potassium, copper, magnesium, iron, zinc, manganese, calcium, phosphorus, iodine, chlorine and selenium. Choline and/or inositol may also be comprised in the complex microbial mineral. Typically, the content of the complex microbial mineral is greater than 1.0%, preferably 1.2-3% in the water-soluble ingredient of the present invention.

In the present invention, the stabilizer may be a stabilizer conventionally added to formula milk powder, including but not limited to one or more of a carrageenan, a locust bean gum, a gellan gum, a xanthan gum, a gelatin, an acacia gum and a soybean polysaccharide. The content of the stabilizer is typically 0.1-1% in the water-soluble ingredient of the present invention.

In a preferred embodiment, on the basis of the total mass of the water-soluble composition, the water-soluble composition of the present invention comprises 12-18% of a protein, 60-75% of a digestible carbohydrate, 1-3% of a multivitamin mineral, 0.1-1% of a stabilizer and $\leq$ 10% of an indigestible oligosaccharide.

On the basis of total mass of the structured emulsion, the sum of the content of the water-soluble ingredient in the structured emulsion of the present invention may be 7-20%, such as 7-15% or 7-12%.

On the basis of total mass of the structured emulsion, the content of the oil phase composition in the structured emulsion of the present invention may be 2-6%, such as 2-4.5%.

In some embodiments, on the basis of the total mass of the structured emulsion, the structured emulsion of the present invention comprises 2-6% of the oil phase composition, 7-20% of the water-soluble composition, and 74-92% (such as 74-91%) of water. In some embodiments, the structured emulsion of the present invention comprises 2-4.5% of the oil phase composition, 7-12% of the water-soluble composition and the balance of water.

In some embodiments, on the basis of the total weight of the structured emulsion, the structured emulsion of the present invention comprises: 0.01-0.15% of a vegetable phospholipid; 0.2-1.8% of an emulsifier; 1.5-5%, preferably 1.8-3.5% of an grease; 1.5-3% of a skimmed milk powder; 0.5-1% of a whey protein powder; 0.1-0.4% of a cheese powder (preferably a bovine cheese powder); 4-7% of a carbohydrate; 0.1-0.4% of a multivitamin mineral; 0.04-0.08% of a stabilizer; and 85-91% or the balance of water.

In some embodiments, on the basis of the total weight of the structured emulsion, the structured emulsion of the present invention comprises: 0.004-0.15% of a vegetable phospholipid; 0.2-1.8% of an emulsifier; 1.5-5%, preferably 1.8-3.5% of an grease; 1.5-3% of a skimmed milk powder; 0.5-1% of a whey protein powder; 0.01-0.1% of an animal phospholipid; 4-7% of a carbohydrate; 0.1-0.4% of a multivitamin mineral; 0.04-0.08% of a stabilizer; and the balance of water.

Preferably, the vegetable phospholipid is derived from a vegetable phospholipid product. Preferably, the vegetable phospholipid is a sunflower phospholipid and/or a soybean phospholipid, preferably a sunflower phospholipid. preferably, in the structured emulsion, on the basis of the total weight of the phospholipids comprised in the structured emulsion, the content of phosphatidylcholine (PC) is 25-35%, and the content of phosphatidylethanolamine (PE) is 20-35%, the content of phosphatidylinositol (PI) is 10-25% and the content of sphingomyelin (SM) is 10-25%.

Preferably, the structured emulsion comprises sterols; preferably, the content of the sterols is 0.2-0.3% on the basis of the total lipids comprised in the structured emulsion. Preferably, the sterols comprise cholesterol and phytosterol. Preferably, the mass ratio of the cholesterol to the phytosterol is 0.2-0.6, preferably 0.25-0.58.

Preferably, the grease is the grease composition described in any embodiment herein; the vegetable phospholipid, emulsifier, carbohydrate, multivitamin mineral and stabilizer are as described in any embodiment herein.

Preferably, in terms of fatty acids in the grease, the content of saturated fatty acids is ≤ 45%, the content of monounsaturated fatty acids is ≤ 50%, and the content of polyunsaturated fatty acids is ≤ 30% on the basis of the total mass of fatty acids. Preferably, in terms of fatty acids in the grease, the content of saturated fatty acids is 32-45%, preferably 32-38%, on the basis of the total mass of fatty acids. Preferably, in terms of fatty acids in the grease, the content of monounsaturated fatty acids is 25-50%, preferably 30-45%, and more preferably 38-45%, on the basis of the total mass of fatty acids. Preferably, in terms of fatty acids in the grease, the content of polyunsaturated fatty acids is 15-30%, preferably 18-23%, on the basis of the total mass of fatty acids. preferably, the content of solid fats in the grease at 30°C is no more than 7%.

preferably, in terms of fatty acids in the grease, the mass ratio of oleic acids: palmitic acids: linoleic acids is (1.5-2.5):1:(0.7-1.2), preferably (1.7-2.1):1:(0.7-1.0). Preferably, in terms of fatty acids in the grease, the content of oleic acids is 25-45%, preferably 30-42%, and more preferably 38-42%. Preferably, in terms of fatty acids in the grease, the content of palmitic acids is 18-25%, preferably 19-23%. Preferably, the ratio of the Sn-2 palmitic acid to the total palmitic acids in the grease is at least 30%. Preferably, the ratio of the Sn-2 palmitic acid to the total palmitic acids in the grease composition is 30-60%, preferably 30-55%. Preferably, in terms of fatty acids in the grease, the content of linoleic acids is 10-25%, preferably 13-20%, and more preferably 16-20%.

Preferably, the grease comprises one or more of a rice oil, a structured fat, a bovine milk fat, a soybean oil, a coconut oil, a high oleic sunflower seed oil, a sunflower seed oil, a linseed oil, an ARA oil and a DHA algae oil. Preferably, the grease comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil. In some preferred embodiments, the grease comprises or consist of a rice oil, a structured fat, a soybean oil, a coconut oil, a high oleic sunflower seed oil, a linseed oil, an ARA oil and a DHA algae oil; preferably, on the basis of the total weight of the grease, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil. In a preferred embodiment, the grease comprises or consist of a structured fat, a bovine milk fat, a coconut oil, a high oleic sunflower seed oil, a sunflower seed oil, a linseed oil, an ARA oil and a DHA algae oil; preferably, on the basis of the total weight of the grease, the grease comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil. Preferably, the structured fat is an OPO structured fat.

In one or more embodiments, on the basis of the total mass of the water-soluble component, the water-soluble component comprises 12-18% of a protein, 60-75% of a digestible carbohydrate, 0.5-3% of a multivitamin mineral and 0.1-1% of a stabilizer in the structured emulsion.

Preparation method

The method for preparing the structured emulsion of the present invention comprises the following steps:

(1) mixing an oil-soluble component to provide an oil phase composition of the present invention;
(2) mixing a water-soluble ingredient with water to obtain a water phase composition;
(3) mixing and emulsifying the oil phase composition and the water phase composition to obtain the emulsion.

In a preferred embodiment, the method further comprises step (4): sterilizing the emulsion.

In a preferred embodiment, the structured emulsion is a structured emulsion as described in any embodiment herein.

In the above step (1), the oil-soluble components comprise a phospholipid, an grease and other optional components (such as an emulsifier, glycolipids, *etc.*). The phospholipids, grease, emulsifier, glycolipid, *etc.* are preferably as described in any embodiment herein. Preferably, the oil-soluble component is mixed, and then stirred at a temperature of 35-60°C to form an oil phase composition, which is the oil phase.

Preferably, in terms of fatty acids in the grease component, the content of saturated fatty acids is ≤ 45 wt%, the content of monounsaturated fatty acids is ≤ 50 wt%, and the content of polyunsaturated fatty acids is ≤ 30 wt% on the basis of the total mass of fatty acids. Preferably, in terms of fatty acids in the grease component, the content of saturated fatty acids is 32-45 wt%, preferably 32-38 wt%, on the basis of the total mass of fatty acids. Preferably, in terms of fatty acids in the grease component, the content of monounsaturated fatty acids is 25-50 wt%, preferably 30-45 wt%, and more preferably 38-45 wt%, on the basis of the total mass of fatty acids. Preferably, in terms of fatty acids in the grease component, the content of polyunsaturated fatty acids is 15-30 wt%, preferably 18-23 wt%, on the basis of the total mass of fatty acids. Preferably, the content of solid fats in the grease component at 30°C is no more than 7%.

Preferably, in terms of fatty acids in the grease component, the mass ratio of oleic acids: palmitic acids: linoleic acids is (1.5-2.5): 1:(0.7-1.2), preferably (1.7-2.1):1:(0.7-1.0). Preferably, in terms of fatty acids in the grease component, the content of oleic acids is 25-45 wt%, preferably 30-42 wt%, and more preferably 38-42 wt%. Preferably, in terms of fatty acids in the grease component, the content of palmitic acids is 18-25 wt%, preferably 19-23%. Preferably, the ratio of Sn-2 palmitic acid to the total palmitic acids in the grease component is at least 30 wt%. Preferably, the ratio of the Sn-2 palmitic acid to the total palmitic acids in the grease composition is 30-60 wt%, preferably 30-55 wt%. Preferably, in terms of fatty acids in the grease, the content of linoleic acids is 10-25 wt%, preferably 13-20 wt%, and more preferably 16-20 wt%.

Preferably, the grease component comprises one or more of a rice oil, a structured fat, a bovine milk fat, a soybean oil, a coconut oil, a high oleic sunflower seed oil, a sunflower seed oil, a linseed oil, an ARA oil and a DHA algae oil. Preferably, the grease component comprises one or more of a structured fat, a coconut oil, a high oleic sunflower seed oil, a linseed oil, an ARA oil and a DHA algae oil, and optionally comprises one or more of a rice oil, a soybean oil, a bovine milk fat and a sunflower seed oil. In some preferred embodiments, the grease comprises or consist of a rice oil, a structured fat, a soybean oil, a coconut oil, a high oleic sunflower seed oil, a linseed oil, an ARA oil and a DHA algae oil; preferably, on the basis of the total weight of the grease component, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease component comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil. In a preferred embodiment, the grease component comprises or consist of a structured fat, a bovine milk fat, a coconut oil, a high oleic sunflower seed oil, a sunflower seed oil, a linseed oil, an ARA oil and a DHA algae oil; preferably, on the basis of the total weight of the grease component, the grease component comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease component comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil. Preferably, the structured fat is an OPO structured fat.

In the above step (2), the water-soluble ingredient such as the protein source material, the carbohydrate, the complex microbial mineral and the stabilizer can be mixed with water, stirred at 33-38°C (preferably stirred under a water bath at this temperature) to form the water phase. The protein source material may be, for example, the skim milk powder, whey protein powder and cheese powder as described herein.

In some embodiments, in the above step (2), the vegetable phospholipid product is mixed with water and stirred, then the animal phospholipid product is added and stirred evenly, and then the water-soluble ingredient is added to obtain the water phase composition. In some embodiments, the water-soluble ingredient such as the protein, the carbohydrate, the complex microbial mineral, and the stabilizer can be mixed with water, and stirred under a water bath below 35°C to form the water phase.

In some embodiments, in the above step (3), the oil phase composition and the water phase composition are mixed and then treated by one or more methods of a shear emulsification, a colloid mill emulsification, a ball mill emulsification, a ultrasonic emulsification, a membrane emulsification, a microwave emulsification, a sonic emulsification or a self-emulsification. When the shear emulsification is used, the shear rate may be 3000-20000 rpm and the shear time may be 1-15 min; preferably, the shear rate is 3000-10000 rpm, and the shear time is 1-5min; when the ultrasonic emulsification is used, the ultrasonic power density may be 60-300 W/cm$^2$ and the ultrasonic treatment time may be 1-20 min.

In some embodiments, in the above step (3), the oil phase composition and the water phase composition may be mixed, and then subjected to shearing, and/or homogenization, and/or micro-jet emulsification. Preferably, the shear rate is 3000-20000 rpm; the shear time is 1-15 min, and the micro-jet has a pressure of 10-500 bars, and performed for more than 3 cycles; the homogenization has a pressure of 10-500 bars, and performed for more than 3 cycles.

In some embodiments, in the above step (3), the oil phase composition and the water phase composition are not mixed or are mixed and subjected to dual-channel or multi-channel microfluidic treatment.

In some embodiments, in the above step (3), the oil phase and the water phase are mixed at a temperature of 33-38°C (such as under a water bath at this temperature), and stirred less than 20 minutes, and then sheared and homogenized. Preferably, the shear rate is ≤ 4000 rpm, and the shear time is 1-5 min; the homogenization has a pressure of ≤ 20 bars, and can be performed 1-5 times. In some embodiments, the oil phase and the water phase are mixed under a water bath below 35°C.

In some embodiments, the oil phase composition and the water phase are mixed at room temperature, and then sheared and homogenized; preferably, the shear rate is ≥ 8000 rpm and the pressure for the homogenization is ≥ 150 bars.

In the above step (4), the sterilization can be pasteurization, high pressure instantaneous sterilization or high pressure sterilization. In some embodiments, the primary emulsion is kept at 60-85°C for 15 s to 30 min for pasteurization. In other embodiments, high temperature instantaneous sterilization is carried out by keeping the emulsion obtained in step (3) at 110-140°C for 1-30 s. Alternatively, ultrahigh pressure sterilization is carried out by keeping the emulsion obtained in step (3) under a pressure of 100-600 MPa for 5-30 min.

The present invention also provides a method for preparing a composition for use in food, the method comprises the steps of: (1) providing an emulsion of the present invention; (2) drying the emulsion of step (1).

Drying methods include, but are not limited to, one or more of conventional high-temperature spray drying, electrostatic low-temperature spray, vacuum freeze drying, and cold air spray drying. In some embodiments, the structured emulsion is dried using the spray drying method. When the spray drying is used, the inlet air temperature can be 120-200°C, and the outlet air temperature can be 60-110°C.

In some embodiments, when the cold air spray drying is used, the inlet air temperature is 70-110°C, and the outlet air temperature is 35-50°C.

Other products

Therefore, in some embodiments, the present invention also provides a dry powder, which is the powder obtained by drying the structured emulsion of the present invention, that is, the aforementioned composition for use in food. In some embodiments, on the basis of the total mass of the composition for use in food, the composition for use in food of the present invention comprises: 15-30% of an grease; 0.05-1.0%, preferably 0.1-0.5% of a phospholipid component; 20-28% of a protein component; 40-55% of a carbohydrate; 0.1-0.8% of a stabilizer; 0.8-2.0% of a multivitamin mineral; and 2-4% of an emulsifier. In some embodiments, on the basis of the total mass of the composition for use in food, the composition for use in food of the present invention comprises: 15-30% of an grease component; 0.05-1%, preferably 0.1-0.5% of a phospholipid component; 20-28% of a protein component; 40-55% of a carbohydrate; 0.1-0.8% of a stabilizer; and 1-3% of an emulsifier. Preferably, the grease is the grease composition described in any embodiment of the present invention; preferably, the phospholipid component is the polar lipid composition described in any embodiment of the present invention; preferably, the protein component is skim milk powder, whey protein powder and cheese powder. It should be understood that cheese powder comprises sphingomyelin, which in the context of the present invention is a phospholipid component. In some embodiments, on the basis of the total mass of the composition for use in food, the composition for use in food of the present invention comprises: 15-30% of an grease; 0.05-0.3% of a vegetable phospholipid; 13-18% of a skimmed milk powder; 5-8% of a whey protein powder; 0.8-2.5% of a cheese powder; 40-55% of a carbohydrate; 0.1-0.8% of a stabilizer; 0.8-2.0% of a multivitamin mineral; and 2-4% of an emulsifier.

Preferably, the dry powder of the present invention is milk powder.

The present invention also provides a water-reconstituted milk, which comprises the dry powder (milk powder) of the present invention and is prepared by dissolving the dry powder in water.

The present invention also provides a food composition, characterized in that, the food composition comprises the polar lipid composition of the present invention; or comprises the grease composition of the present invention; or comprises the oil phase composition of the present invention; or comprises the structured emulsion of the present invention; or comprises the structured emulsion prepared by the method of the present invention; or comprises the composition for use in food of the present invention; or comprises the composition for use in food prepared by the method of the present invention.

In some embodiments, the food composition is in the form of an emulsion or a powder. The food composition can also be in the form of a tablet, or a block, or a capsule, or a pill, or a semi-emulsion.

In some embodiments, the food composition is a nutritional fortifier.

The food composition of the present invention can be used as a food product or a food supplement or for the manufacture of a food product (or food) or a food supplement. Accordingly, the present invention relates to a food product or a food supplement comprising or consisting essentially of the food composition of the present invention (or comprising an emulsion formed by re-dispersing the food composition of the present invention).

In the present invention, the food product can be consumed by different groups including but not limited to mammals, ruminants, poultry and humans.

According to the present invention, the method for preparing the food product or the food supplement comprises adding the food composition of the present invention to the raw materials for the preparation of the food product or the food supplement during the preparation process. The food composition of the present invention may be mixed with one or more food ingredients and/or supplements to prepare the food product or the food supplement of the present invention.

The food product or the food supplement can be used directly or mixed with an aqueous medium before use. The aqueous medium may be water, milk (such as whole milk, semi skimmed milk or skimmed milk), yoghurt, beverages (such as soft drinks, for example fruit juices), soy milk beverages, rice beverages, vegetable-based beverages, milkshakes, coffee or tea. In some embodiments, the food product described in the present invention is a formula food.

Other methods and uses

The present invention also provides a method for promoting digestion and absorption of an animal, the method comprises using the food product or food supplement of the present invention as part or all of the food ingested by the animal. The present invention also provides the use of a polar lipid composition, a grease composition, and oil phase composition, a structured emulsion, a composition for use in food, a food composition, a food product and a food additive described in the present invention in preparing a food for promoting digestion and absorption of an animal. The animal comprises a mammals and a ruminant. The mammal comprises human. In some embodiments, the human comprises an infant, a pregnant women, a middle-aged and elderly people, and people with weakened immunity. In some embodiments, the food is a formula food.

The structured emulsion or the water-reconstituted milk of the spray-dried powder of the present invention has the following advantages:

(1) it has a better emulsion stability compared with the freeze-thawed milk of breast milk;
(2) it can significantly improve the efficacy of lipid digestion and absorption of infants compared with the traditional infant formula milk.

The following examples are further elaborations of the present invention, but the content of the present invention is not limited by the following content. The embodiments in the specification of the present invention are only used to illustrate the present invention, and do not limit the protection scope of the present invention. The protection scope of the present invention is limited only by the claims, and any omission, substitution or modification made by those skilled in the art on the basis of the disclosed embodiments of the present invention will fall within the protection scope of the present invention.

Conventional instruments and equipments in the art are used in the following examples. The experimental methods not specified for the specific conditions in the following embodiments are generally carried out in accordance with conventional conditions or in accordance with the conditions recommended by the manufacturer. Various starting materials are used in the following examples, and conventional commercially available products are used unless otherwise stated. In the specification of the present invention and the following examples, "%" means percentage by weight, "part" means part by weight, and proportion means ratio by weight, unless otherwise specified.

The detection methods used in the various examples and comparative examples of the present invention are as follows.

Determination of the solid fats in the grease composition: The grease was melted at 60°C, transferred to a solid fat tube that comes with the instrument, then the solid fat tube was placed under a water bath at 25°C to 35°C for $\leq 20$ min, and the content of solid fats in the grease composition was determined by Mini SPEC MQ20 solid fat analyzer of Bruker. The determination was repeated three times, and the results were averaged.

Emulsion stability analysis: The stability of the emulsion at 40°C was analyzed by TURBISCAN LAB universal stability analyzer. Parameter setting: Temperature: 40°C, scanning frequency: 5 min/time, detection time: 6 h. The thermodynamic instability index (TSI) of the emulsion and the peak thickness at the top of the emulsion were recorded over time.

Determination of the particle size of the emulsion: 1 mL of the emulsion to be tested was taken and added to 4 mL of EDTA-SDS buffer (35 mM EDTA, 139 mM SDS, pH 7.00), and a laser particle size analyzer (model LS13320, manufacturer Beckman, USA) was used to determine the particle size of the emulsion.

Simulated digestion of the structured emulsion *in vitro* for infants:

1) Stomach digestion stage: 20 mL of reconstituted milk of infant formula milk powder was taken and placed in a glass reactor with a water bath jacket, and the pH was adjusted to 5.3; 45 mL of simulated gastric digestion solution (pepsin 650 U/mL, lipase 87 U/mL, NaTC 80 $\mu$M, NaCl 68 mM, Tris 2 mM, maleic acid 2 mM, phospholipid 20 $\mu$M, pH 5.3) was added; 0.25 M NaOH was added dropwise to keep the pH of the system at 5.3 (pH-STAT), and reacted for 60 min with magnetic stirring under a water bath at 37°C; the consumed NaOH was recorded to calculate the molar content of the free fatty acids (FFA) produced. After the gastric digestion reaction was completed, excess alkaline liquor was added to make the pH of the system exceed 9, so as to inactivate the enzymes, and all the reaction mixture was transferred to the subsequent small intestine digestion.

2) Small intestine digestion stage: 1 M NaOH was used to adjust the gastric digestion solution to pH 6.6, and 97.5 mL of simulated intestinal digestion solution (pancreatin 500 USP/mL, NaTC 2 mM, NaCl 150 mM, Tris 2 mM, maleic acid 2 mM, phospholipid 0.18 mM, pH 6.6) was added, 0.25 M NaOH was added dropwise to keep the pH of the system at 6.6 (pH-STAT), and reacted for 120 min with magnetic stirring under a water bath at 37°C; the consumed NaOH was recorded to calculate the molar content of the free fatty acids (FFA) produced.

3) Liquid lipid lipolysis degree: lipolysis degree represented the release percentage of free fatty acids (FFA) of triglycerides in the initial emulsion, and can be calculated by the following formula:

$$LD \text{ (lipolysis degree)} = \frac{FFA \times MMeq}{FC \times V \times 3}$$

wherein, LD: lipolysis degree (%), FFA: free fatty acid content (mol, can be obtained from the moles of NaOH consumed), MMeq: average molecular weight of triglyceride in emulsion (g/mol), FC: fat concentration (g/mL), V: emulsion volume.

**Example I**

Raw material source

Skimmed milk powder: Fonterra, New Zealand;
Whey protein concentrate powder: Fonterra, New Zealand;
Lactose: Leprino food, USA;
Vegetable phospholipid: Yihai Kerry;
Vegetable oil: Shanghai Kerry Food Industries Co., Ltd.;
DHA algae oil: CABIO Biotech (Wuhan) Co., Ltd.;
ARA single cell oil: CABIO Biotech (Wuhan) Co., Ltd.;
Locust bean gum: DuPont, USA;
Carrageenan: Danisco, USA;
Vitamin mineral premix: provided by Yili Group;
Bovine cheese powder: Fonterra, model Lipid-100, New Zealand.

Example 1

Step (1): 0.22 g of sunflower phospholipid, 3.96 g of monoglyceride, 33.2 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;

Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;

Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsion of Example 1.

Example 2

The structured emulsion and spray-dried powder were prepared as follows:

Step (1): 0.11g of sunflower phospholipid, 3.96 g of monoglyceride, 33.2 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 7.84 g of whey protein powder, 1.3g of bovine cheese powder, 60.1 g of lactose, 1.34 g of complex microbial mineral, 0.6 g of stabilizer (0.45 g of locust bean gum, and 0.15 g of carrageenan) and 871.55g of water were mixed and stirred under a water bath below 35°C to form a water phase;
Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, homogenizing 3 times; and
Step (4): The emulsion was kept under a water bath at 65°C for 30 minutes for pasteurization, and then cooled to room temperature to obtain the structured emulsion of Example 2.

Example 3

Step (1): 0.22 g of sunflower phospholipid, 2.4 g of monoglyceride, 20 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 884.99g of water were mixed and stirred under a water bath below 35°C to form a water phase;
Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and
Step (4): The emulsion was kept under a water bath at 65°C for 30 minutes for pasteurization, and then cooled to room temperature to obtain the structured emulsion of Example 3.

Example 4

Step (1): 0.22 g of sunflower phospholipid, 3.96 g of monoglyceride, 33.2 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;
Step (3): The oil phase and the water phase were mixed, and then sheared and homogenized; the shear rate was 10000 rpm, the shear time was 3 min and the homogenization condition was: 200 bars, 3 times; and
Step (4): The emulsion was kept under a water bath at 65°C for 30 minutes for pasteurization, and then cooled to room temperature to obtain the structured emulsion of Example 4.

Example 5

Step (1): 0.22 g of sunflower phospholipid, 3.96 g of monoglyceride, 33.2 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;

Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times;

Step (4): The emulsion was kept under a water bath at 65°C for 30 minutes for pasteurization, and then cooled to room temperature to obtain the structured emulsion of Example 5; and

Step (5): Spray drying with the inlet air temperature of 170°C and the outlet air temperature of 85°C was performed to obtain the spray-dried powder of the structured emulsion of Example 5.

Example 6

Step (1): 0.22 g of sunflower phospholipid, 3.96 g of monoglyceride, 33.2 g of grease II (43.2% of OPO structured fat, 9.6% of bovine milk fat, 7.2% of coconut oil, 13.6% of high oleic sunflower seed oil, 20.8% of sunflower seed oil, 3.6 % of linseed oil, 1% of ARA oil, 1% of DHA algae oil) were weighed, mixed and stirred under a water bath at 60°C to form an oil phase;

Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;

Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsion of Example 6.

Comparative example a

Step (1): 0.22 g of sunflower phospholipid, 3.96 g of monoglyceride, 33.2 g of grease III (15% of rice oil, 23% of palm oil, 18% of soybean oil, 18% of coconut oil, 22% of high oleic sunflower seed oil, 2% of linseed oil, 1% of ARA oil, and 1% of DHA algae oil) were weighed, mixed and stirred under a water bath at 60°C to form an oil phase;

Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;

Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsion of Comparative example a.

Comparative example b

Step (1): 0.11g of sunflower phospholipid, 3.96 g of monoglyceride, 33.2 g of grease III (15% of rice oil, 23% of palm oil, 18% of soybean oil, 18% of coconut oil, 22% of high oleic sunflower seed oil, 2% of linseed oil, 1% of ARA oil, and 1% of DHA algae oil) were weighed, mixed and stirred under a water bath at 60°C to form an oil phase;

Step (2): 20 g of skim milk powder, 7.84 g of whey protein powder, 1.3g of bovine cheese powder, 60.1 g of lactose, 1.34 g of complex microbial mineral, 0.6 g of stabilizer (0.45 g of locust bean gum, and 0.15 g of carrageenan) and 871.55g of water were mixed and stirred under a water bath below 35°C to form a water phase;

Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsion of Comparative example b.

Comparative example c

Step (1): 0.22 g of sunflower phospholipid, 2.4 g of monoglyceride, 20 g of grease III (15% of rice oil, 23% of palm oil, 18% of soybean oil, 18% of coconut oil, 22% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 884.99g of water were mixed and stirred under a water bath below 35°C to form a water phase;
Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and
Step (4): The emulsion was kept under a water bath at 65°C for 30 minutes for pasteurization, and then cooled to room temperature to obtain the structured emulsion of Comparative example c.

Comparative example d

Step (1): 0.22 g of sunflower phospholipid, 3.96 g of monoglyceride, 33.2 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 8.8 g of whey protein powder, 61.0 g of lactose, 1.34 g of complex microbial mineral, 0.6 g of stabilizer (0.45 g of locust bean gum, and 0.15 g of carrageenan) and 870.88g of water were mixed and stirred under a water bath below 35°C to form a water phase;
Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and
Step (4): The emulsion was kept under a water bath at 65°C for 30 minutes for pasteurization, and then cooled to room temperature to obtain the structured emulsion of Comparative example d.

Comparative example e

Step (1): 3.96 g of monoglyceride, 33.2 g of grease I (15% of rice oil, 28% of OPO structured fat, 20% of soybean oil, 18% of coconut oil, 15% of high oleic sunflower seed oil, 2% of linseed oil, 1% of ARA oil, and 1% of DHA algae oil) were weighed, mixed and stirred under a water bath at 60°C to form an oil phase;
Step (2): 20 g of skim milk powder, 8.8 g of whey protein powder, 61.0 g of lactose, 1.34 g of complex microbial mineral, 0.6 g of stabilizer (0.45 g of locust bean gum, and 0.15 g of carrageenan) and 871.1g of water were mixed and stirred under a water bath below 35°C to form a water phase;
Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and
Step (4): The emulsion was kept under a water bath at 65°C for 30 minutes for pasteurization, and then cooled to room temperature to obtain the structured emulsion of Comparative example e.

Comparative example f

Step (1): 0.22 g of sunflower phospholipid, 3.96 g of monoglyceride, and 33.2 g of soybean oil were weighed, mixed, and stirred under a water bath at 60°C to form an oil phase;
Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;
Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsion of Comparative example f.

Comparative example g

Step (1): 0.22 g of sunflower phospholipid, 3.96 g of monoglyceride, 33.2 g of grease IV (40% of palm stearin, 40% of palm oil, 20% of palm kernel oil) were weighed, mixed, and stirred under a water bath at 60°C to form an oil phase;

Step (2): 20 g of skim milk powder, 7.84 g of whey protein powder, 2.51 g of bovine cheese powder, 60.1 g of lactose, 1.34 g of complex microbial mineral, 0.6 g of stabilizer (0.45 g of locust bean gum, and 0.15 g of carrageenan) and 870.23 g of water were mixed and stirred under a water bath below 35°C to form a water phase;

Step (3): the oil phase and the water phase were mixed, stirred under a water bath at 35°C for 15 minutes, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsion of comparative example g.

In combination with the grease composition formula in Table 1 and the emulsion preparation process in Table 2, it can be seen that examples 1-4 and example 6 are the structured emulsions prepared according to the present invention, and example 5 is the product of spray drying on the basis of example 1; The difference between comparative example a and example 1, comparative example b and example 2, and comparative example c and example 3 is that the content of Sn-2 palmitic acid in fatty acid composition is significantly lower than that of the present invention; comparative example d is on the basis of example 1 without adding sphingomyelin (the 1% of sphingomyelin shown in Table 1 comes from the raw material of whey protein powder); comparative example e is on the basis of example 1 without adding phospholipid (the 0.1% of sphingomyelin shown in Table 1 comes from the raw material of whey protein powder) and bovine milk cheese powder. Compared with the examples of the present invention, the PUFA in the grease composition of comparative example f is much higher than the specified value of the present invention; the SAFA content and SFC value of the grease composition of comparative example g are higher than the specified values of the present invention.

Table 1: Content and composition of the oil phase composition in the structured emulsion

|  | Example | | | | | | Comparative example | | | | | | |
|---|---|---|---|---|---|---|---|---|---|---|---|---|---|
|  | 1 | 2 | 3 | 4 | 5 | 6 | a | b | c | d | e | f | g |
| Total lipids g/100 mL | 3.8 | 3.75 | 2.34 | 3.8 | 3.8 | 4.0 | 3.8 | 3.75 | 2.34 | 3.8 | 3.8 | 3.8 | 3.8 |
| SFA/% | 36.9 | 36.96 | 36.83 | 36.9 | 36.9 | 35.7 | 37.21 | 37.27 | 36.83 | 36.9 | 37.02 | 16.3 | **63** |
| MUFA/% | 41.7 | 41.74 | 41.63 | 41.7 | 41.7 | 44.4 | 41.83 | 41.89 | 41.76 | 41.7 | 41.8 | 24.5 | 30.3 |
| PUFA/% | 21.4 | 21.29 | 21.54 | 21.4 | 21.4 | 19.9 | 20.95 | 20.84 | 21.1 | 21.4 | 21.17 | **58.7** | 6.4 |
| Oleic acid/% | 39.86 | 39.91 | 39.8 | 39.86 | 39.86 | 41.95 | 40.38 | 40.42 | 40.31 | 39.86 | 39.96 | 24.35 | 30.1 |
| Palmitic acid/% | 20.07 | 20.09 | 20.05 | 20.07 | 20.07 | 22.14 | 20.3 | 20.32 | 20.28 | 20.07 | 20.12 | 10.94 | 43.9 |
| Linoleic acid/% | 18.59 | 18.47 | 18.74 | 18.59 | 18.59 | 17.32 | 18.28 | 18.16 | 18.44 | 18.59 | 18.34 | 52.42 | 50.5 |
| Sn-2 palmitic acid/% (by total palmitic acid) | 32.41 | 32.32 | 32.45 | 32.41 | 32.41 | 52.35 | **12.06** | **12.04** | **12.07** | 32.41 | 32.41 | **3.36** | **10.9** |
| SFC, % | 6.2 | 5.9 | 5.1 | 6.2 | 6.2 | 6.5 | 5.8 | 5.4 | 4.8 | 6.2 | 6.4 | 0 | **21.6** |
| Phospholipid/% (by total lipids) | 0.85 | 0.44 | 1.4 | 0.85 | 0.85 | 1.4 | 0.85 | 0.44 | 1.4 | 0.85 | **0.1** | 0.85 | 0.85 |
| PC/% (by total phospholipid) | 31.94 | 31.83 | 31.94 | 31.94 | 31.94 | 31.94 | 31.94 | 31.83 | 31.94 | 39.22 | 27.49 | 31.94 | 31.94 |
| PE/% (by total phospholipid) | 26.03 | 26.15 | 26.03 | 26.03 | 26.03 | 26.03 | 26.03 | 26.15 | 26.03 | 29.8 | 25.31 | 26.03 | 26.03 |
| PI/% (by total phospholipid) | 17.09 | 16.91 | 17.09 | 17.09 | 17.09 | 17.09 | 17.09 | 16.91 | 17.09 | 17.71 | 7.28 | 17.09 | 17.09 |
| SM/% (by total phospholipid) | 12.41 | 12.59 | 12.41 | 12.41 | 12.41 | 12.41 | 12.41 | 12.59 | 12.41 | **1** | **30.23** | 12.41 | 12.41 |
| Total sterol/% (by total lipids) | 0.25 | 0.25 | 0.27 | 0.25 | 0.25 | 0.26 | 0.25 | 0.26 | 0.28 | 0.25 | 0.24 | 0.15 | 0.08 |
| Cholesterol: Phytosterol | 1:3.6 | 1:3.6 | 1:2.1 | 1:3.6 | 1:3.6 | 1:1.8 | 1:3.7 | 1:3.8 | 1:2.2 | 1:4.1 | 1:4.1 | 1:1.8 | 1:1 |

Table 2: Selection of preparation process and/or spray drying of infant formula emulsion

| Example/ comparative example | Water bath condition before shearing | Shear condition | Homogenization condition | Spray drying |
|---|---|---|---|---|
| Example 1 | 35°C 15 min | 3000 rpm, 3 min | 20 bars, 3 times | / |
| Example 2 | 35°C 15 min | 3000 rpm, 3 min | 20 bars, 3 times | / |
| Example 3 | 35°C 15 min | 3000 rpm, 3 min | 20 bars, 3 times | / |
| Example 4 | / | 10000 rpm, 3 min | 200 bars, 3 times | / |
| Example 5 | 35°C 15 min | 3000 rpm, 3 min | 20 bars, 3 times | Inlet air 170°C, outlet air 85°C |
| Example 6 | 35°C 15 min | 3000 rpm, 3 min | 20 bars, 3 times | / |
| Comparative example a | 35°C 15 min | 3000 rpm, 3 min | 20 bars, 3 times | / |
| Comparative example b | 35°C 15 min | 3000 rpm, 3 min | 20 bars, 3 times | / |
| Comparative example c | 35°C 15 min | 3000 rpm, 3 min | 20 bars, 3 times | / |
| Comparative example d | 35°C 15 min | 3000 rpm, 3 min | 20 bars, 3 times | / |
| Comparative example e | 35°C 15 min | 3000 rpm, 3 min | 20 bars, 3 times | / |
| Comparative example 1 | 35°C 15 min | 3000 rpm, 3 min | 20 bars, 3 times | / |
| Comparative example g | 35°C 15 min | 3000 rpm, 3 min | 20 bars, 3 times | / |

Table 3: Stability analysis of infant formula emulsion or water-reconstituted milk (40°C)

| Example/comparative example | 6 h TSI index | Peak thickness at the top/mm |
|---|---|---|
| Example 1 | 4.8±0.4 | 2.2±0.3 |
| Example 2 | 10.8±1.1 | 3.8±0.7 |
| Example 3 | 5.5±0.6 | 2.6±0.4 |
| Example 4 | 1.8±0.2 | 1.6±0.1 |
| Example 5 (water reconstituted milk) | 8.7±0.7 | 3.1±0.7 |
| Example 6 | 7.8±0.7 | 2.6±0.2 |
| Comparative example a | 7.0±0.7 | 2.7±0.2 |
| Comparative example b | 10.1±0.9 | 4.5±0.5 |
| Comparative example c | 4.1±0.6 | 2.3±0.5 |
| Comparative example d | 4.9±0.3 | 2.1±0.1 |
| Comparative example e | 15.2±1.2 | 6.0±0.9 |

(continued)

| Example/comparative example | 6 h TSI index | Peak thickness at the top/mm |
|---|---|---|
| Comparative example f | 8.5±0.7 | 2.5±0.3 |
| Comparative example g | 33.5±5.8 | 7.4±1.2 |

The kinetic instability index (TSI) can intuitively reflect the stability of the emulsion. In general, the larger the TSI value of the emulsion, the worse its stability, and vice versa. The emulsion generally rises to varying degrees during storage, and a creaming layer of a certain thickness is formed on the top of the emulsion. In general, the higher the peak thickness at the top of the emulsion at a certain temperature and within a certain period of time, the greater the degree of rising of the emulsion, and the worse the stability of the emulsion, and vice versa. According to the emulsion stability results of the emulsion or water-reconstituted milk in Table 3, it can be known that the structured emulsion and water-reconstituted milk prepared by the present invention have a TSI index of less than 11 when stored at 40°C for 6 hours, and have a peak thickness at their top of less than 4.0 mm, indicating that the structured emulsion and the reconstituted milk of the powder of the structured emulsion prepared by the present invention have good emulsion stability (**examples 1-3 and examples 5-6**). When the phospholipid and sphingomyelin were removed from the grease composition, the structured emulsion prepared by low-speed shear and low-pressure homogenization had significantly increased TSI index and significantly increased peak thickness at the top of the emulsion, indicating that the stability of the emulsion decreased significantly (**comparative example e**). The emulsion stability of the structured emulsion prepared by high-speed shear and high-pressure homogenization was significantly increased (**example 4**). When the content of saturated fatty acids or solid fats in the grease composition was too high, the stability of the emulsion dropped sharply (**comparative example g**).

Table 4: Change of the lipolysis degree during *in vitro* digestion of infants

| Time | G-0 | G-10 | G-30 | G-60 | 1-10 | 1-30 | 1-60 | 1-120 |
|---|---|---|---|---|---|---|---|---|
| Example 1 | 0 | 5.39 | 5.39 | 5.39 | 58.91 | 66.40 | 70.27 | 75.89 |
| Example 2 | 0 | 5.43 | 5.43 | 5.84 | 63.13 | 67.40 | 70.38 | 75.09 |
| Example 3 | 0 | 5.75 | 6.08 | 6.07 | 60.84 | 64.17 | 68.94 | 77.28 |
| Example 4 | 0 | 5.17 | 5.61 | 5.61 | 60.64 | 64.62 | 67.85 | 73.41 |
| Example 5 | 0 | 6.4 | 6.4 | 6.4 | 60.55 | 66.62 | 70.31 | 78.79 |
| Example 6 | 0 | 5.81 | 6.87 | 6.87 | 62.05 | 67.10 | 71.23 | 79.84 |
| Comparative example a | 0 | 5.65 | 5.65 | 5.65 | 52.71 | 56.62 | 60.71 | 65.50 |
| Comparative example b | 0 | 4.87 | 4.87 | 4.87 | 53.00 | 57.35 | 62.79 | 65.65 |
| Comparative example c | 0 | 5.27 | 5.27 | 5.27 | 53.96 | 59.47 | 63.00 | 66.63 |
| Comparative example d | 0 | 5.10 | 5.22 | 5.54 | 52.78 | 55.69 | 58.10 | 61.40 |
| Comparative example e | 0 | 4.41 | 4.53 | 4.98 | 51.54 | 54.94 | 57.54 | 60.66 |
| Comparative example f | 0 | 5.83 | 6.02 | 6.73 | 50.27 | 56.36 | 60.10 | 64.25 |
| Comparative example g | 0 | 4.22 | 4.22 | 4.22 | 12.84 | 16.61 | 19.08 | 19.19 |

Table 4 shows the change in the lipolysis degree of the structured emulsion or water-reconstituted milk of the examples in the simulated digestion process of infants *in vitro.* In the gastric digestion stage, the lipolysis degree of all emulsions in the stomach was less than 7%, indicating that only a low lipolysis degree in the emulsion occurred in the stomach, and most of the lipolysis occurred in the first 10 min. After the gastric digestion stage, the lipolysis degree of the structured emulsion of the present invention was higher than that of the examples not in the scope of the present invention. In the small intestine digestion stage, the lipolysis degree of the examples and comparative examples reached 50%-70% rapidly in the first 30 min of the small intestine digestion (**except for the comparative example g**), and then tended to level off. It indicated that the lipolysis of the emulsion mainly occurred in the first 30 min of the small intestine digestion. After 180 min of digestion in the gastrointestinal tract, the lipolysis degree of the emulsion or water-reconstituted milk prepared by the present invention reached more than 73% (**examples 1-6**), significantly higher than other emulsions (60-67%). It indicated that the structured emulsion or powder prepared by the present invention can significantly improve the lipid digestion and absorption of infants. The content of oil-based saturated fatty acids and solid fats used in comparative example g was too high, and the stability of the prepared emulsion was extremely poor, resulting in a significantly lower lipolysis degree of the emulsion *in vitro* digestion than other samples (only 19.19%).

Determination of the stability of the emulsion of comparative example

Comparative example 1: Reconstituted milk 1 of commercial formula milk powder (Mead Johnson Enfinitas stage 1 infant formula, purchased from Tmall flagship store of Mead Johnson): 13.7 g of Enfinitas stage 1 infant formula milk powder was weighed, dissolved in water, and adjusted to make the volume to 100 mL to obtain the reconstituted milk 1 of commercial formula milk powder.

Comparative example 2: Reconstituted milk 2 of commercial formula milk powder (Junlebao Super Gold stage I infant formula milk powder, purchased from Tmall flagship store of Junlebao): 13.7 g of Junlebao stage 1 formula milk powder was weighed, dissolved in water, and adjusted to make the volume to 100 mL to obtain the reconstituted milk 2 of commercial formula milk powder.

Comparative example 3: Amallon infant formula milk (Amallon-1 series, purchased from a shopping mall in Denmark).

Comparative example 4: Abbott stage 1 infant formula milk (Similac series, purchased from a shopping mall in Las Vegas, USA).

Comparative example 5: Breast milk (taken from a donor, Shanghai, aged 28-35).

The emulsion stability of the emulsion of commercial milk powder and the breast milk (taken from a donor, Shanghai, aged 28-35) was tested, and the results are shown in Table 5.

Table 5: Test of the stability of the emulsion of comparative example

| Comparative example | 6 h TSI index | Peak thickness at the top/mm |
|---|---|---|
| Comparative example 1 | 4.0±0.3 | 2.4±0.3 |
| Comparative example 2 | 3.5±0.4 | 2.0±0.2 |
| Comparative example 3 | 2.0±0.2 | 1.8±0.3 |
| Comparative example 4 | 2.3±0.1 | 2.0±0.1 |
| Comparative example 5 | 42±6.8 | 8.8±1.3 |

The emulsion of commercial milk powder and the breast milk (taken from a donor, Shanghai, aged 28-35) were subjected to simulated digestion of infants *in vitro,* and the results of the change in the lipolysis degree during the digestion process are shown in Table 6.

Table 6: Change in the lipolysis degree in the simulated digestion process of infants *in vitro*

| Enzymatic hydrolysis time | Comparative Example 1 | Comparative example 2 | Comparative example 3 | Comparative example 4 | Comparative example 5 |
|---|---|---|---|---|---|
| Name | Reconstituted milk of Enfinitas | Reconstituted milk of Junlebao | Amallon formula milk | Abbott formula milk | Breast milk |
| G-0 | 0 | 0 | 0 | 0 | 0 |
| G-10 | 3.88 | 5.68 | 5.36 | 5.86 | 6.12 |
| G-30 | 3.88 | 5.68 | 6.36 | 6.34 | 6.12 |
| G-60 | 3.88 | 5.68 | 5.36 | 6.81 | 6.12 |
| 1-10 | 46.55 | 50.13 | 52.77 | 53.38 | 62.22 |
| 1-30 | 49.82 | 55.05 | 55.48 | 56.26 | 66.09 |
| 1-60 | 54.32 | 58.13 | 57.99 | 58.7 | 71.69 |
| 1-120 | 63.96 | 61.73 | 61.37 | 62.0 | 78.24 |

**Example II**

Raw material source

> Skimmed milk powder: Fonterra, New Zealand;
> Whey protein concentrate powder: Fonterra, New Zealand;
> Lactose: Leprino food, USA;
> Sunflower phospholipid: Yihai Kerry, with a phospholipid content of 54%;
> Soybean phospholipid: Yihai Kerry, with a sunflower phospholipid content of 52%;
> Vegetable oil: Shanghai Kerry Food Industries Co., Ltd.;
> DHA algae oil: CABIO Biotech (Wuhan) Co., Ltd.;
> ARA single cell oil: CABIO Biotech (Wuhan) Co., Ltd.;
> Locust bean gum: DuPont, USA;
> Carrageenan: Danisco, USA;
> Vitamin mineral premix: DSM Corporation;
> Monoglyceride: DuPont Danisco, model MAG-PV
> Cheese powder: Fonterra, New Zealand, with a phospholipid content of 7.6%;
> MFGM: Arla Foods Ingredients Group, Danish, with a phospholipid content of 7.2%;
> Concentrated bovine milk phospholipid powder: Avril Group, French, with a phospholipid content of 18.5%;
> Bovine milk sphingomyelin: Avanti polar lipids company, USA, purity 99%.
> Emulsion preparation method

Preparation method of example 1a-4a and comparative example 1a-6a:

> Step (1): The monoglyceride and the grease were weighed according to Table 7 and Table 9, mixed, and stirred under a water bath at 60°C to form an oil phase.
> Step (2): Other materials were weighed according to Table 8, the vegetable phospholipid and water were mixed, stirred at room temperature for 2 h, then the animal phospholipid was added and stirred evenly, then the protein, the carbohydrate, the oligosaccharide, the multivitamin mineral and the stabilizer were added, and stirred under a water bath below 35°C to form an water phase.
> Step (3): The oil phase and the water phase were mixed, preferably, low-speed sheared and homogenized and/or low-pressure homogenized;
> Step (4): The emulsion was kept under a water bath at 65°C for 30 minutes for pasteurization, and then cooled to room temperature to obtain the structured emulsion of the present invention.

In the step (3), the oil phase and the water phase were mixed by stirring under a water bath lower than 35°C for less than 20 min, the shear rate of the low-speed shear was ≤ 4000 rpm, and the homogenization pressure of the low-pressure homogenization was ≤ 20 bars.

Table 7: Formula of blended oil

|  | Type of grease | Proportion/% | Fatty acid composition of blended oil |
|---|---|---|---|
| Blended oil | Rice oil (RBO) | 21.2 | SFA: 36.9%, MUFA: 41.7%, |
|  | OPO55 | 29.5 | PUFA: 21.4%; |
|  | Soybean oil (SBO) | 29.3 | Oleic acid: 39.86%, Palmitic acid: 20.07%, Linoleic acid: 18.59%; |
|  | Coconut Oil (CNO) | 19.0 | |
|  | DHA algae oil (AO) | 1.0 | Sn-2 palmitic acid/% (by total palmitic acid): 32.41% |

Table 8: Base formula of structured emulsion

| Raw material name | | Content (g) |
|---|---|---|
| Water phase | Skimmed milk powder | 20 |
| | Whey protein powder | 8 |
| | Lactose | 61 |
| | Vitamin mineral premix | 3.9 |
| | Locust bean gum | 0.45 |
| | Carrageenan | 0.15 |
| | Water | 866.5 |
| | Total water phase | 960 |
| Oil phase | Blended oil | 33.6-38.12 |
| | Monoglyceride | 0.2-2 |
| | Animal phospholipid | 0.08-0.4 |
| | Cheese powder | 1.6-4 |
| | Total oil phase (*i.e.*, grease composition) | 40 |
| Total energy | | 652 Kcal |
| Total quality | | 1000 |

Table 9: Formula of the grease composition in the structured milk of the examples and comparative examples

| Serial Number | Monoglyceride | | Vegetable phospholipid | | | | Animal phospholipid | | | |
|---|---|---|---|---|---|---|---|---|---|---|
| | Proportion of monoglyceride in oil phase/% | Monoglyceride mass/g | Vegetable phospholipid source | Proportion of vegetable phospholipid in oil phase% | Vegetable phospholipid product mass/g | Phospholipid content/g | Animal phospholipid source | Proportion of animal phospholipid in oil phase/% | Animal phospholipid product mass/g | Phospholipid content |
| Example 1a | 3 | 1.2 | Sunflower phospholipid | 0.5 | 0.2 | 0.108 | Cheese powder | 0.5 | 2.6 | 0.198 |
| Example 2a | 5 | 2 | Sunflower phospholipid | I | 0.4 | 0.216 | MFGM | 0.3 | 1.7 | 0.122 |
| Example 3a | 0.5 | 0.2 | Sunflower phospholipid | 0.2 | 0.08 | 0.043 | Concentrated bovine milk phospholipid powder | 0.8 | 1.7 | 0.315 |
| Example 4a | 4 | 1.6 | Soybean phospholipid | 0.6 | 0.24 | 0.13 | Bovine milk sphingomyelin | 0.4 | 0.2 | 0.198 |
| Comparative example 1a | 3 | 1.2 | Sunflower phospholipid | 0.5 | 0.2 | 0.108 | | 0 | 0 | 0 |
| Comparative example 2a | 3 | 1.2 | Sunflower phospholipid | 0 | 0 | 0 | MFGM | 0.5 | 2.8 | 0.202 |
| Comparative example 3a | 0.3 | 0.12 | Soybean phospholipid | 0.5 | 0.2 | 0.108 | Concentrated bovine milk phospholipid powder | 0.5 | 1.1 | 0.165 |
| Comparative example 4a | 6 | 2.4 | Soybean phospholipid | 0.5 | 0.2 | 0.108 | Bovine milk sphingomyelin | 0.5 | 0.2 | 0.198 |
| Comparative example 5a | 3 | 1.2 | Sunflower phospholipid | 1.1 | 0.44 | 0.238 | Cheese powder | 0.2 | 1.1 | 0.084 |
| Comparative example 6a | 3 | 1.2 | Sunflower phospholipid | 0.1 | 0.04 | 0.022 | Cheese powder | 0.9 | 4.7 | 0.357 |
| Comparative example 7a | 3 | 1.2 | Sunflower phospholipid | 0.5 | 0.2 | 0.108 | Cheese powder | 0.5 | 2.6 | 0.198 |

(continued)

| Serial Number | Monoglyceride | | Vegetable phospholipid | | | | Animal phospholipid | | | |
| --- | --- | --- | --- | --- | --- | --- | --- | --- | --- | --- |
| | Proportion of monoglyceride in oil phase/% | Monoglyceride mass/g | Vegetable phospholipid source | Proportion of vegetable phospholipid in oil phase% | Vegetable phospholipid product mass/g | Phospholipid content/g | Animal phospholipid source | Proportion of animal phospholipid in oil phase/% | Animal phospholipid product mass/g | Phospholipid content |
| Comparative example 8a | 3 | 1.2 | Sunflower phospholipid | 0.5 | 0.2 | 0.108 | Cheese powder | 0.5 | 2.6 | 0.198 |

Preparation method of comparative exemple 7a:

Step (1): The monoglyceride, the vegetable phospholipid and the grease were weighed according to Tables 7 and 9, mixed, and stirred under a water bath at 60°C to form an oil phase.

Step (2): Other materials were weighed according to Table 8, firstly the animal phospholipid and water were mixed and stirred evenly, then the protein, the carbohydrate, the oilgosaccharide, the multivitamin mineral and the stabilizer were added, and stirred under a water bath below 35°C to form an water phase.

Step (3): The oil phase and the water phase were mixed, preferably, low-speed sheared and homogenized and/or low-pressure homogenized;

Step (4): The emulsion was kept under a water bath at 65°C for 30 minutes for pasteurization, and then cooled to room temperature to obtain the structured emulsion of the present invention.

In the step (3), the oil phase and the water phase were mixed by stirring under a water bath lower than 35°C for less than 20 min, the shear rate of the low-speed shear was ≤ 4000 rpm, and the homogenization pressure of the low-pressure homogenization was ≤ 20 bars.

Preparation method of comparative example 8a

Step (1): The monoglyceride and the grease were weighed according to Tables 7 and 9, mixed, and stirred under a water bath at 60°C to form an oil phase.

Step (2): Other materials were weighed according to Table 8, firstly the vegetable phospholipid was dispersed in water, then the animal phospholipid was added and stirred evenly, then the protein, the carbohydrate, the oligosaccharide, the multivitamin mineral and the stabilizer were added, and stirred under a water bath below 35°C to form an water phase.

Step (3): The oil phase and the water phase were mixed, preferably, low-speed sheared and homogenized and/or low-pressure homogenized;

Step (4): The emulsion was kept under a water bath at 65°C for 30 minutes for pasteurization, and then cooled to room temperature to obtain the structured emulsion of the present invention.

In the step (3), the oil phase and the water phase were mixed by stirring under a water bath lower than 35°C for less than 20 min, the shear rate of the low-speed shear was ≤ 4000 rpm, and the homogenization pressure of the low-pressure homogenization was ≤ 20 bars.

Comparative example 9a (same as comparative example 3): Amallon infant formula milk (Amallon-1 series, purchased from a shopping mall in Denmark).

Comparative example 10a (same as comparative example 4): Abbott stage 1 infant formula milk (Similac series, purchased from a shopping mall in Las Vegas, USA).

Comparative example 11a (same as comparative example 5): Breast milk (taken from a donor, Shanghai, aged 28-35).

The lipolysis degree and the emulsion stability were determined for the structured milk prepared in examples 1a-4a and comparative examples 1a-8a, emulsions of commercialized milk powders (comparative examples 9a and 10a) and breast milk (comparative example 11a). The results are shown in Table 10 and Table 11.

Table 10: Change of the lipolysis degree during *in vitro* digestion of infants

| Time | G-0 | G-10 | G-30 | G-60 | I-10 | I-30 | I-60 | I-120 |
|---|---|---|---|---|---|---|---|---|
| Example 1a | 0 | 5.51 | 5.51 | 5.51 | 62.41 | 65.12 | 68.71 | 70.65 |
| Example 2a | 0 | 5.32 | 5.32 | 5.32 | 61.56 | 64.87 | 68.48 | 69.29 |
| Example 3a | 0 | 5.27 | 5.27 | 5.27 | 61.79 | 65.99 | 68.72 | 70.21 |
| Example 4a | 0 | 5.25 | 5.25 | 5.25 | 61.90 | 64.56 | 7.92 | 69.81 |
| Comparative example 1a | 0 | 5.22 | 5.22 | 5.22 | 54.03 | 57.29 | 58.26 | 60.43 |

(continued)

| Time | G-0 | G-10 | G-30 | G-60 | I-10 | I-30 | I-60 | I-120 |
|---|---|---|---|---|---|---|---|---|
| Comparative example 2a | 0 | 5.31 | 5.31 | 5.31 | 54.45 | 57.97 | 59.47 | 61.03 |
| Comparative example 3a | 0 | 5.23 | 5.23 | 5.23 | 61.12 | 64.09 | 66.31 | 68.32 |
| Comparative example 4a | 0 | 5.09 | 5.09 | 5.09 | 56.81 | 59.98 | 61.72 | 63.21 |
| Comparative example 5a | 0 | 5.14 | 5.14 | 5.14 | 54.21 | 56.09 | 58.98 | 60.92 |
| Comparative example 6a | 0 | 5.20 | 5.20 | 5.20 | 56.43 | 58.87 | 61.34 | 63.45 |
| Comparative example 7a | 0 | 5.32 | 5.32 | 5.32 | 51.32 | 53.54 | 58.38 | 60.67 |
| Comparative example 8a | 0 | 5.09 | 5.09 | 5.09 | 51.89 | 54.36 | 59.91 | 62.89 |
| Comparative example 9a | 0 | 5.68 | 5.68 | 5.68 | 50.13 | 55.05 | 58.13 | 61.73 |
| Comparative example 10a | 0 | 5.86 | 6.34 | 6.81 | 53.38 | 56.26 | 58.70 | 62.00 |
| Comparative example 11a | 0 | 6.12 | 6.12 | 6.12 | 59.22 | 63.09 | 66.69 | 72.24 |

Table 11: Stability analysis of infant formula emulsion or water-reconstituted milk (40°C)

| Example/comparative example | 6 h TSI index | Peak thickness at the top/mm |
|---|---|---|
| Example 1a | 6.0±0.4 | 2.2±0.2 |
| Example 2a | 6.4±0.2 | 2.4±0.3 |
| Example 3a | 6.4±0.3 | 2.3±0.3 |
| Example 4a | 6.3±0.3 | 2.2±0.3 |
| Comparative example 1a | 6.0±0.3 | 2.5±0.1 |
| Comparative example 2a | 6.3±0.4 | 2.3±0.4 |
| Comparative example 3a | 14.3±0.4 | 4.3±0.2 |
| Comparative example 4a | 5.8±0.3 | 2.0±0.2 |
| Comparative example 5a | 6.4±0.3 | 2.4±0.3 |
| Comparative example 6a | 6.3±0.4 | 2.3±0.3 |
| Comparative example 7a | 6.1±0.3 | 2.2±0.2 |
| Comparative example 8a | 6.2±0.4 | 2.3±0.3 |
| Comparative example 9a | 3.5±0.4 | 2.0±0.2 |
| Comparative example 10a | 2.3±0.1 | 2.0±0.1 |
| Comparative example 11a | 42±6.8 | 8.8±1.3 |

It can be seen from Table 11 that the lipolysis degree of the structured milk prepared in examples 1a-4a and comparative example 3a is closer to that of breast milk (comparative example 11a), and is much higher than that of the emulsions of commercial milk powders (comparative example 9a and comparative example 10a).

The kinetic instability index (TSI) can intuitively reflect the stability of the emulsion. In general, the larger the TSI value of the emulsion, the worse its stability, and vice versa. The emulsion generally rises to varying degrees during storage, and a creaming layer of a certain thickness is formed on the top of the emulsion. In general, the higher the peak thickness at the top of the emulsion at a certain temperature and within a certain period of time, the greater the degree of rising of the emulsion, and the worse the stability of the emulsion, and vice versa. According to Table 11, the structured milk prepared in examples 1a-4a, comparative examples 1a-2a and comparative examples 4a-8a and the water-reconstituted milk obtained in comparative examples 9a-10a have a TSI index of less than 10 when stored at 40°C for 6 h, and have a peak thickness at their top of less than 3.0 mm; while the structured milk prepared in comparative example 3a has a TSI index of less than 14.3, and has a peak thickness at their top of less than 4.3 mm, indicating that the structured milk prepared in comparative example 3a has poor stability.

In summary, only the structured milk prepared in examples 1a-4a has a lipolysis degree closer to breast milk (comparative example 11a), which is much higher than that of the emulsions of commercial milk powders (comparative example 9a and comparative example 10a), and has a good emulsion stability.

## Claims

1. A polar lipid composition for formula food, **characterized in that**, the polar lipid composition comprises more than 60%, preferably more than 90% of phospholipids on the basis of the total mass of the polar lipid composition; the phospholipids comprise 25-35% of phosphatidylcholine PC, 20-35% of phosphatidylethanolamine PE, 10-30% of phosphatidylinositol PI and 10-25% of sphingomyelin SM on the basis of the total mass of the phospholipids; preferably, the phospholipids are provided by one or more of a vegetable-derived phospholipid product and an animal-derived phospholipid product; more preferably, the vegetable-derived phospholipid product is a sunflower phospholipid and/or a soybean phospholipid, and the animal-derived phospholipid product is a cheese powder, a MFGM, a concentrated bovine milk phospholipid powder and/or a bovine milk sphingomyelin, preferably a bovine cheese powder.

2. The polar lipid composition of claim 1, **characterized in that**, the polar lipid composition further comprises sterols, and the polar lipid composition comprises 8-40%, preferably 20-37% of the sterols on the basis of the total mass of the lipid composition; preferably, the sterols comprise cholesterol and phytosterol; preferably, the mass ratio of the cholesterol to the phytosterol is 0.2-0.6.

3. An grease composition, **characterized in that**, in terms of fatty acids in the grease composition, the content of saturated fatty acids is ≤45%, the content of monounsaturated fatty acids is ≤50%, and the content of polyunsaturated fatty acids is ≤ 30%;

   preferably, the content of solid fats in the grease composition at 30°C is no more than 7%;
   preferably, the fatty acids in the grease composition meets one or more of the following conditions:

   (1) the mass ratio of oleic acids: palmitic acids: linoleic acids is (1.5-2.5): 1:(0.7-1.2), preferably (1.7-2.1):1:(0.7-1.0);
   (2) the content of oleic acids is 25-45%, preferably 30-42%;
   (3) the content of palmitic acids is 18-25%;
   (4) the content of linoleic acids is 10-25%, preferably 13-20%;
   (5) the ratio of Sn-2 palmitic acid to the total palmitic acids is at least 30%.

4. The grease composition of claim 3, **characterized in that**, the grease composition comprises one or more of a vegetable-derived grease, an animal-derived grease and a microbial-derived grease; wherein,

   the vegetable-derived grease comprises a modified seed grease and/or a non-modified seed grease; preferably, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a safflower oil, a cottonseed oil, a linseed oil, a mango kernel oil, an avocado kernel oil, a shea nut oil, and an illipe butter; preferably, the modification comprises transesterification and/or fractionation;
   the animal-derived grease comprises one or more of a bovine milk-derived grease, a goat milk-derived grease, a buffalo milk-derived grease, a camel milk-derived grease and an aquatic animal-derived grease, and one or more of the grease in a bovine milk protein, the grease in a goat milk protein, the grease in a buffalo milk protein, and the grease in a camel milk protein, the animal-derived grease comprises a modified and/or a non-modified grease;
   the microbial-derived grease is selected from one or more of an algae oil and a fungal oil, the microbial-derived grease comprises a modified and/or a non-modified grease;
   preferably, the grease composition comprises or consists of a rice oil, a structured fat, a soybean oil, a coconut oil, a high oleic sunflower seed oil, a linseed oil, an ARA oil and a DHA algae oil; preferably, on the basis of the total weight of the grease composition, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae is 0.5-1.5%; more preferably, the grease composition comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil; or

preferably, the grease composition comprises or consists of a structured fat, a bovine milk fat, a coconut oil, a high oleic sunflower seed oil, a sunflower seed oil, a linseed oil, an ARA oil and a DHA algae oil; preferably, on the basis of the total weight of the grease composition, the grease composition comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil; more preferably, the grease composition comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil.

5. An oil phase composition, **characterized in that**, the oil phase composition comprises the polar lipid composition of claim 1 or 2, the grease composition of claim 3 or 4, and an emulsifier; preferably, on the basis of the total lipid mass, the oil phase composition comprises 0.4-2.9%, preferably 0.4-1.8% of phospholipids; preferably, on the basis of the total weight of the oil phase composition, the content of the emulsifier is 8-12%.

6. A structured emulsion, **characterized in that**, the structured emulsion comprises:

2-6% of the oil phase composition of claim 5,
7-20% of a water-soluble composition, and
74-91% of water;
preferably, the water-soluble composition comprises 12-18% a protein, 60-75% of a digestible carbohydrate, more than 1.0%, preferably 1.2-3% of a multivitamin mineral, 0.1-1% of a stabilizer, and ≤ 10% of an indigestible oligosaccharide;
preferably, the protein is selected from at least one of the following proteins: a bovine milk- or goat milk-derived whey protein, casein, a legume-derived protein, a grain protein, and a partially or fully hydrolyzed protein from a bovine milk- or goat milk-derived whey protein, casein, or a soybean-derived protein; more preferably, the legume-derived protein is selected from a soybean protein and/or a pea protein; more preferably, the grain protein comprises one or more of a rice protein, a rice bran protein, a wheat protein, a rye protein, a sorghum protein, a corn protein, and an oat protein;
preferably, the digestible carbohydrate is selected from at least one of a lactose, a glucose, a galactose, a maltose, a sucrose, a fructose, a starch, a maltodextrin, a glucose syrup, and a corn syrup; preferably, more than 60% of the digestible carbohydrate is the lactose;
preferably, the stabilizer is selected from at least one of a carrageenan, a locust bean gum, a gellan gum, a xanthan gum, a gelatin, an acacia gum, and a soybean polysaccharide;
preferably, the indigestible oligosaccharide is selected from at least one of a fructooligosaccharide, a galactooligosaccharide, a glucose oligosaccharide, a xylooligosaccharide, a mannan oligosaccharide and a cyclodextrin oligosaccharide;
preferably, the multivitamin mineral comprises at least the following components: at least one of vitamin A, vitamin D, vitamin E, vitamin K1, vitamin B1, vitamin B2, vitamin B6, vitamin B12, niacin, folic acid, pantothenic acid, vitamin C, biotin, sodium, potassium, copper, magnesium, iron, zinc, manganese, calcium, phosphorus, iodine, chlorine, selenium, choline, and inositol.

7. A structured emulsion, **characterized in that**, on the basis of the total weight of the structured emulsion, the structured emulsion comprises: 0.01-0.15% of a vegetable phospholipid; 0.2-1.8% of an emulsifier; 1.5-5%, preferably 1.8-3.5% of an grease; 1.5-3% of a skimmed milk powder; 0.5-1% of a whey protein powder; 0.1-0.4% of a cheese powder, preferably a bovine cheese powder; 4-7% of a carbohydrate; 0.1-0.4% of a multivitamin mineral; 0.04-0.08% of a stabilizer; and 85-91% or the balance of water; or the structured emulsion comprises: 0.004-0.15% of a vegetable phospholipid; 0.2-1.8% of an emulsifier; 1.5-5%, preferably 1.8-3.5% of a grease composition; 1.5-3% of a skimmed milk powder; 0.5-1% of a whey protein powder; 0.01-0.1% of an animal phospholipid; 4-7% of a carbohydrate; 0.1-0.4% of a multivitamin mineral; 0.04-0.08% of a stabilizer; and the balance of water;

preferably, the vegetable phospholipid is a sunflower phospholipid and/or a soybean phospholipid, preferably a sunflower phospholipid; preferably, in the structured emulsion, on the basis of the total weight of the phospholipids comprised in the structured emulsion, the content of phosphatidylcholine (PC) is 25-35%, and the content of phosphatidylethanolamine (PE) is 20-35%, the content of phosphatidylinositol (PI) is 10-25% and the content of sphingomyelin (SM) is 10-25%;
preferably, the structured emulsion comprises sterols; preferably, the content of the sterols is 0.2-0.3% on the basis of the total lipids comprised in the structured emulsion; preferably, the mass ratio of cholesterol to phytosterol in the sterols is 0.2-0.6, preferably 0.25-0.58;

preferably, in terms of fatty acids in the grease, the content of saturated fatty acids is ≤ 45%, the content of monounsaturated fatty acids is ≤ 50%, and the content of polyunsaturated fatty acids is ≤ 30% on the basis of the total mass of fatty acids; preferably, the content of solid fats in the grease at 30°C is no more than 7%; preferably, in terms of fatty acids in the grease, the mass ratio of oleic acids: palmitic acids: linoleic acids is (1.5-2.5):1:(0.7-1.2), preferably (1.7-2.1):1:(0.7-1.0);

preferably, in terms of fatty acids in the grease, the content of oleic acids is 25-45%, preferably 30-42%, and more preferably 38-42%; the content of palmitic acids is 18-25%, preferably 19-23%; the content of linoleic acids is 10-25%, preferably 13-20%, and more preferably 16-20%;

preferably, the ratio of Sn-2 palmitic acid to the total palmitic acids in the grease is at least 30%, preferably 30-60%; preferably, the grease comprises one or more of a structured fat, a coconut oil, a high oleic sunflower seed oil, a linseed oil, an ARA oil and a DHA algae oil, and optionally comprise one or more of a rice oil, a soybean oil, a bovine milk fat and a sunflower seed oil; preferably, the grease comprises or consist of a rice oil, a structured fat, a soybean oil, a coconut oil, a high oleic sunflower seed oil, a linseed oil, an ARA oil and a DHA algae oil, preferably, on the basis of the total weight of the grease, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae oil is 0.5-1.5%, and more preferably, the grease comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil; or preferably, the grease comprises or consist of a structured fat, a bovine milk fat, a coconut oil, a high oleic sunflower seed oil, a sunflower seed oil, a linseed oil, an ARA oil and a DHA algae oil, preferably, on the basis of the total weight of the grease, the grease comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil, more preferably, the grease comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil; preferably, the structured fat is an OPO structured fat.

8. A method for preparing a structured emulsion, **characterized in that**, the method comprises the steps of: (1) providing the grease composition of claim 3 or 4, an emulsifier and a vegetable phospholipid to prepare an oil phase; (2) mixing a water-soluble composition with water to obtain a water phase; and (3) emulsifying the oil phase and the water phase to obtain the emulsion; preferably, the method further comprises step (4): sterilizing the emulsion obtained in step (3);

preferably, in step (1), the emulsifier, the vegetable phospholipid, the grease composition and an optional component are mixed and stirred at a temperature of 60 ± 5°C to form the oil phase composition; preferably, on the basis of the total weight of the oil phase, the content of the emulsifier is 8-12%, the content of vegetable phospholipid is 0.1-1.5%, and the content of the grease composition is 87-91%;

preferably, in step (2), a protein, a carbohydrate, a complex microbial mineral and a stabilizer are mixed with water and stirred below 35°C to form the water phase;

preferably, the step (3) comprises: mixing the oil phase and the water phase and emulsifying same by one or more methods of a shear emulsification, a colloid mill emulsification, a ball mill emulsification, a ultrasonic emulsification, a membrane emulsification, a microwave emulsification, a sonic emulsification or a self-emulsification; preferably, when the shear emulsification is used, the shear rate is 3000-20000 rpm and the shear time is 1-15 min; when the ultrasonic emulsification is used, the ultrasonic power density is 60-300 W/cm$^2$ and the ultrasonic treatment time is 1-20 min;

preferably, the step (3) comprises: mixing the oil phase and the water phase, and then subjecting same to shearing, homogenization and/or micro-jet emulsification; wherein, the shear rate is 3000-20000 rpm, and the shear time is 1-15 min; the micro-jet has a pressure of 10-600 bars, and performed for more than 3 cycles; the homogenization has a pressure of 10-600 bars, and performed for more than 3 cycles;

preferably, the step (3) comprises: mixing the oil phase and the water phase to perform a dual-channel or multi-channel microfluidic treatment, or directly performing a dual-channel or multi-channel microfluidic treatment on the oil phase and the water phase without premixing;

preferably, in step (3), the oil phase and the water phase are mixed at 33-38°C and stirred for less than 20 min, and then sheared and homogenized; preferably, the shear rate is ≤ 4000 rpm, the shear time is 1-5 min, and the homogenization pressure is ≤ 20 bars;

preferably, in step (4), the sterilization is pasteurization, high pressure instantaneous sterilization or high pressure sterilization; preferably, the primary emulsion is kept at 60-85°C for 15 s to 30 min for pasteurization, or the primary emulsion is kept at 110-140°C for 1-30 s for high temperature instantaneous sterilization, or the primary emulsion is kept under a pressure of 100-600 MPa for 5-30 min for ultrahigh pressure sterilization.

9. A method for preparing a structured emulsion, **characterized in that**, the method comprises the steps of:

(1) providing an oil phase composition;
(2) mixing a vegetable phospholipid and water, then adding an animal phospholipid, stirring same evenly, and then adding a water-soluble ingredient to obtain a water phase composition;
(3) emulsifying the oil phase composition and the water phase composition to obtain the structured emulsion;

preferably, the method further comprises step (4): sterilizing the emulsion obtained in step (3);
preferably, the oil phase composition comprises a grease composition and a monoglyceride;
preferably, in step (2), the water-soluble substance comprises a protein, a carbohydrate, a oligosaccharide, a multivitamin mineral, and a stabilizer
preferably, the step (3) comprises: mixing the oil phase composition and the water phase, and emulsifying same by one or more methods of a shear emulsification, a colloid mill emulsification, a ball mill emulsification, a ultrasonic emulsification, a membrane emulsification, a microwave emulsification, a sonic emulsification or a self-emulsification; preferably, when the shear emulsification is used, the shear rate is 3000-20000 rpm and the shear time is 1-15 min; when the ultrasonic emulsification is used, the ultrasonic power density is 60-300 W/cm$^2$ and the ultrasonic treatment time is 1-20 min;
preferably, the step (3) comprises: mixing the oil phase composition and the water phase, and then subjecting same to shearing, homogenization and/or micro-jet emulsification; wherein, the shear rate is 3000-20000 rpm, and the shear time is 1-15 min; the micro-jet has a pressure of 10-600 bars, and performed for more than 3 cycles; the homogenization has a pressure of 10-600 bars, and performed for more than 3 cycles;
preferably, the step (3) comprises: mixing the oil phase composition and the water phase to perform a dual-channel or multi-channel microfluidic treatment, or directly performing a dual-channel or multi-channel microfluidic treatment on the oil phase composition and the water phase without premixing;
preferably, in step (3), the oil phase composition and the water phase are mixed under a water bath below 35°C and stirred for less than 20 min, and then sheared and homogenized; preferably, the shear rate is ≤ 4000 rpm, the shear time is 1-5 min, and the homogenization pressure is ≤ 20 bars;
preferably, in step (4), the sterilization is pasteurization, high pressure instantaneous sterilization or high pressure sterilization; preferably, the primary emulsion is kept under a water bath at 60-85°C for 15 s to 30 min for pasteurization, or the primary emulsion is kept at 110-140°C for 1-30 s for high temperature instantaneous sterilization, or the primary emulsion is kept under a pressure of 100-600 MPa for 5-30 min for ultrahigh pressure sterilization.

10. The method of claim 9, **characterized in that**, in terms of fatty acids in the grease component, the content of saturated fatty acids is ≤ 45 wt%, the content of monounsaturated fatty acids is ≤ 50 wt%, and the content of polyunsaturated fatty acids is ≤ 30 wt% on the basis of the total mass of fatty acids; preferably, the content of solid fats in the grease component at 30°C is no more than 7%; preferably, in terms of fatty acids in the grease component, the mass ratio of oleic acids: palmitic acids: linoleic acids is (1.5-2.5):1:(0.7-1.2), preferably (1.7-2.1):1:(0.7-1.0);

preferably, in terms of fatty acids in the grease component, the content of oleic acids is 25-45 wt%, preferably 30-42 wt%, and more preferably 38-42 wt%; the content of palmitic acids is 18-25 wt%, preferably 19-23%; the content of linoleic acids is 10-25 wt%, preferably 13-20 wt%, and more preferably 16-20 wt%;
preferably, the ratio of Sn-2 palmitic acid to the total palmitic acids in the grease component is at least 30 wt%; preferably 30-60 wt%;
preferably, the grease composition comprises one or more of a vegetable-derived modified or non-modified grease, an animal-derived modified or non-modified grease and a microbial-derived modified or non-modified grease;
preferably, the vegetable-derived grease comprises a modified seed grease and/or a non-modified seed grease;
preferably, the seed grease is selected from at least one of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter;
preferably, the modification comprises transesterification and/or fractionation;

preferably, the animal-derived grease comprises one or more of a bovine milk-derived grease, a goat milk-derived grease, a buffalo milk-derived grease, a camel milk-derived grease and an aquatic animal-derived grease (such as krill oil and fish oil), and the grease in a bovine milk protein, the grease in a goat milk protein, the grease in a buffalo milk protein, and the grease in a camel milk protein;

preferably, the animal-derived grease comprises a modified and/or a non-modified grease;

preferably, the microbial-derived grease is selected from one or more of an algae oil and a fungal oil;

preferably, the microbial-derived grease comprises a modified and/or a non-modified grease;

preferably, the grease composition further comprises at least one DHA and ARA selected from an algae oil, a fish oil, a fungal oil, a microbial oil and a single cell oil, wherein the content the DHA or the content of the ARA is no more than 3% of total lipids;

preferably, the grease component comprises one or more of a structured fat, a coconut oil, a high oleic sunflower seed oil, a linseed oil, an ARA oil and a DHA algae oil, and optionally comprises one or more of a rice oil, a soybean oil, a bovine milk fat and a sunflower seed oil; preferably, the grease comprises or consist of a rice oil, a structured fat, a soybean oil, a coconut oil, a high oleic sunflower seed oil, a linseed oil, an ARA oil and a DHA algae oil, preferably, on the basis of the total weight of the grease component, the content of the rice oil is 13-17%, the content of the structured fat is 26-30%, the content of the soybean oil is 18-22%, the content of the coconut oil is 16-20%, the content of the high oleic sunflower seed oil is 13-17%, the content of the linseed oil is 1-3%, the content of the ARA oil is 0.5-1.5%, and the content of the DHA algae oil is 0.5-1.5%, and more preferably, the grease component comprises 15% of the rice oil, 28% of OPO structured fat, 20% of the soybean oil, 18% of the coconut oil, 15% of the high oleic sunflower seed oil, 2% of the linseed oil, 1% of the ARA oil and 1% of the DHA algae oil; or preferably, the grease component comprises or consists of a structured fat, a bovine milk fat, a coconut oil, a high oleic sunflower seed oil, a sunflower seed oil, a linseed oil, an ARA oil and a DHA algae oil, preferably, on the basis of the total weight of the grease component, the grease component comprises 41-45% of the structured fat, 8-11% of the bovine milk fat, 5-8% of the coconut oil, 12-15% of the high oleic sunflower seed oil, 18-22% of the sunflower seed oil, 2.5-4% of the linseed oil, 0.5-1.5% of the ARA oil and 0.5-1.5% of the DHA algal oil, more preferably, the grease component comprises 43.2% of the structured fat, 9.6% of the bovine milk fat, 7.2% of the coconut oil, 13.6% of the high oleic sunflower seed oil, 20.8% of the sunflower seed oil, 3.6% of the linseed oil, 1% of the ARA oil and 1% of the DHA algae oil; Preferably, the structured fat is an OPO structured fat.

11. The method of claim 9, **characterized in that**, the vegetable phospholipid is a sunflower phospholipid and/or a soybean phospholipid, preferably a sunflower phospholipid; preferably, in the structured emulsion, on the basis of the total weight of the phospholipids comprised in the structured emulsion, the content of phosphatidylcholine (PC) is 25-35 wt%, and the content of phosphatidylethanolamine (PE) is 20-35 wt%, the content of phosphatidylinositol (PI) is 10-25 wt% and the content of sphingomyelin (SM) is 10-25 wt%.

12. The method of claim 9, **characterized in that**, the oil phase composition further comprises sterols, and the content of the sterols is 0.2-0.3% on the basis of the total mass of the oil phase composition; preferably, the mass ratio of cholesterol to phytosterol in the sterols is 0.2-0.6, preferably 0.25-0.58.

13. A method for preparing a composition for use in food, **characterized in that**, the method comprises the steps of:

(1) providing the structured emulsion of claim 6 or 7 or the structured emulsion prepared by the method of any one of claims 8-12;
(2) drying the emulsion of step (1);

preferably, the drying comprises: one or more of spray drying, vacuum freeze drying, or cold air spray drying; preferably, when the spray drying is used, the inlet air temperature is 120-200°C, and the outlet air temperature is 60-110°C;
preferably, when the cold air spray drying is used, the inlet air temperature is 70-110°C, and the outlet air temperature is 35-50°C.

14. A food composition, **characterized in that**, the food composition comprises the polar lipid composition of claim 1 or 2; or comprises the grease composition of claim 3 or 4; or comprises the oil phase composition of claim 5; or comprises the structured emulsion of claim 6 or 7; or comprises the structured emulsion prepared by the method of any one of claims 8-12; or comprises the composition for use in food prepared by the method of claim 13, preferably, the food composition is in the form of an emulsion or the form of a powder, a tablet, a block, a capsule, a pill, or a semiemulsion; preferably, the food composition is a nutritional fortifier.

15. A method for promoting digestion and absorption in an animal, using the food composition of claim 14 as part or all of the food ingested by the animal.

## INTERNATIONAL SEARCH REPORT

| International application No. |
| --- |
| **PCT/CN2021/142533** |

**A.  CLASSIFICATION OF SUBJECT MATTER**

A23C 9/152(2006.01)i;  A23C 9/156(2006.01)i;  A23C 9/158(2006.01)i;  A23C 9/16(2006.01)i;  A23K 10/00(2016.01)i

According to International Patent Classification (IPC) or to both national classification and IPC

**B.  FIELDS SEARCHED**

Minimum documentation searched (classification system followed by classification symbols)

A23C, A23K

Documentation searched other than minimum documentation to the extent that such documents are included in the fields searched

Electronic data base consulted during the international search (name of data base and, where practicable, search terms used)

CNTXT, WPABSC, ENTXTC, VEN, CJFD: 奶粉, 乳粉, 配方食品, 磷脂, 磷脂酰胆碱, 磷脂酰乙醇胺, 肌醇磷脂, 磷脂酰肌醇, 鞘磷脂, 大豆磷脂, 葵磷脂, 葵花磷脂, 乳酪粉, 甾醇, 饱和脂肪酸, 单不饱和脂肪酸, 多不饱和脂肪酸, 乳化剂, 消化, 吸收, milk powder?, formula food, phospholipid, phosphatidylcholine, phosphatidylethanolamine, phosphatidylinositol, sphingomyelin, PC, PE, PI, SM, soy phospholipid?, sunflower phospholipid?, cheese powder?, sterol, saturated fatty acid?, monounsaturated fatty acid?, polyunsaturated fatty acid?, SFA, MSFA, PSFA, emulsifier?, digestion, absorption

**C.  DOCUMENTS CONSIDERED TO BE RELEVANT**

| Category* | Citation of document, with indication, where appropriate, of the relevant passages | Relevant to claim No. |
| --- | --- | --- |
| X | CN 104171799 A (BEIJING CENTURY JINDE HEALTH PRODUCT CO., LTD.) 03 December 2014 (2014-12-03)<br>claim 1, description paragraphs 5, 23 | 1, 2, 14, 15 |
| X | CN 106106753 A (HEILONGJIANG FEIHE DAIRY INDUSTRY CO., LTD.) 16 November 2016 (2016-11-16)<br>claims 1-10, and embodiment 1 | 3, 4, 7-14 |
| Y | CN 106106753 A (HEILONGJIANG FEIHE DAIRY INDUSTRY CO., LTD.) 16 November 2016 (2016-11-16)<br>claims 1-10, and embodiment 1 | 5, 6 |
| Y | CN 104171799 A (BEIJING CENTURY JINDE HEALTH PRODUCT CO., LTD.) 03 December 2014 (2014-12-03)<br>claim 1, description paragraphs 5, 23 | 5, 6 |
| X | CN 1108893 A (NESTEC S.A.) 27 September 1995 (1995-09-27)<br>claims 1-6, description page 4 last paragraph | 3, 4, 14 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 March 2022** | **31 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/142533**

### C.    DOCUMENTS CONSIDERED TO BE RELEVANT

| Category* | Citation of document, with indication, where appropriate, of the relevant passages | Relevant to claim No. |
|---|---|---|
| X | CN 109662151 A (BRIGHT DAIRY & FOOD CO., LTD.) 23 April 2019 (2019-04-23) claims 1-16, description paragraph 8 | 7, 9, 11-15 |
| X | US 2016309769 A1 (NESTEC S. A.) 27 October 2016 (2016-10-27) embodiments 1-6 | 7, 9, 11-14 |

Form PCT/ISA/210 (second sheet) (January 2015)

**INTERNATIONAL SEARCH REPORT**
Information on patent family members

International application No.

**PCT/CN2021/142533**

| Patent document cited in search report | | | Publication date (day/month/year) | Patent family member(s) | | | Publication date (day/month/year) |
|---|---|---|---|---|---|---|---|
| CN | 104171799 | A | 03 December 2014 | CN | 104171799 | B | 28 September 2016 |
| CN | 106106753 | A | 16 November 2016 | CN | 106106753 | B | 06 August 2019 |
| CN | 1108893 | A | 27 September 1995 | CA | 2127012 | A1 | 21 February 1995 |
| | | | | EP | 0639333 | A1 | 22 February 1995 |
| | | | | AU | 6467994 | A | 02 March 1995 |
| | | | | US | 5518753 | A | 21 May 1996 |
| | | | | JPH | 07147901 | A | 13 June 1995 |
| | | | | NO | 942365 | A | 21 February 1995 |
| | | | | NZ | 260865 | A | 27 February 1996 |
| | | | | RU | 2119751 | C1 | 10 October 1998 |
| CN | 109662151 | A | 23 April 2019 | None | | | |
| US | 2016309769 | A1 | 27 October 2016 | EP | 3079499 | A1 | 19 October 2016 |
| | | | | WO | 2015086169 | A1 | 18 June 2015 |
| | | | | AU | 2014361223 | A1 | 19 May 2016 |
| | | | | RU | 2689550 | C1 | 28 May 2019 |
| | | | | MX | 2016007632 | A | 13 October 2016 |
| | | | | CL | 2016001453 | A1 | 17 February 2017 |
| | | | | ES | 2725610 | T3 | 25 September 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016163883 A2
- US 20180092376 A1
- US 20170231262 A1

**Non-patent literature cited in the description**

- **MICHALSKI, M. C. ; BRIARD, V ; MICHEL, F. et al.** *Journal of Dairy Science,* 2005, vol. 88, 1927-1940
- **GALLIER, S. ; VOCKING, K. ; POST, J. A. et al.** *Colloids Surf B Biointerfaces,* 2015, vol. 136, 329-39
- **LOPEZ C ; MÉNARD O.** *Colloids Surf B,* 2011, vol. 83, 29-41